(19) Europäisches Patentamt / European Patent Office / Office européen des brevets

(11) EP 4 076 888 B1

(12) # FASCICULE DE BREVET EUROPEEN

(45) Date de publication et mention de la délivrance du brevet:
**27.08.2025 Bulletin 2025/35**

(21) Numéro de dépôt: **20851208.7**

(22) Date de dépôt: **18.12.2020**

(51) Classification Internationale des Brevets (IPC):
***B29C 33/64** (2006.01)* ***B29D 30/06** (2006.01)*

(52) Classification Coopérative des Brevets (CPC):
**B29C 33/64; B29D 30/0654;** B29D 2030/0659

(86) Numéro de dépôt international:
**PCT/FR2020/052550**

(87) Numéro de publication internationale:
**WO 2021/123678 (24.06.2021 Gazette 2021/25)**

(54) **PROCÉDÉ DE VULCANISATION D'UN PNEU CRU UTILISANT UNE COMPOSITION LUBRIFIANTE D'AGENT DE DÉMOULAGE À BASE D'ORGANOPOLYSILOXANE**

VERFAHREN ZUM VULKANISIEREN EINES REIFENROHLINGS UNTER VERWENDUNG EINER FORMLÖSUNGSMITTEL-SCHMIERMITTELZUSAMMENSETZUNG AUF ORGANOPOLYSILOXAN-BASIS

METHOD FOR VULCANIZING A GREEN TIRE USING AN ORGANOPOLYSILOXANE-BASED MOLD RELEASE AGENT LUBRICANT COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2019 FR 1915183**

(43) Date de publication de la demande:
**26.10.2022 Bulletin 2022/43**

(73) Titulaire: **Elkem Silicones France SAS**
**69190 Saint-Fons (FR)**

(72) Inventeurs:
- **FEDER, Michel**
**38200 Vienne (FR)**
- **BREUNIG, Stefan**
**38200 Villette de Vienne (FR)**

(74) Mandataire: **Garcia Escomel, Cristina**
**Elkem Silicones France SAS**
**9, rue Spécia**
**69190 Saint-Fons (FR)**

(56) Documents cités:
**WO-A2-2006/106236**
**GB-A- 2 088 898**
**JP-A- H0 596 546**
**US-A- 5 738 813**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente invention concerne un procédé de vulcanisation d'un pneu cru utilisant une composition lubrifiante d'agent de démoulage à base d'organopolysiloxane. La présente invention concerne également une composition lubrifiante d'agent de démoulage à base d'organopolysiloxane.

### Arrière-plan technologique

La fabrication d'un pneumatique comporte principalement trois étapes à savoir la préparation des produits semi-finis, l'assemblage de ces derniers et la cuisson de l'enveloppe.

La préparation des produits semi-finis consiste à élaborer les constituants de l'enveloppe : gommes, nappes textiles et métalliques, tringles
L'étape d'assemblage consiste à superposer les différents produits semi-finis, en vue de constituer le pneumatique. La carcasse, constituée de différentes couches internes : gomme intérieure, nappe carcasse, tringles, et toutes les nappes de gommes, est placée sur un cylindre au diamètre du pneu : le tambour. Après conformation, le tambour faisant prendre à la carcasse son aspect torique, les nappes de ceinture et la bande de roulement sont posées : un pneu cru, enveloppe non vulcanisée et non façonnée, encore plastique est obtenu. A la fin de l'étape d'assemblage, le futur pneumatique est aussi appelé bandage cru ou enveloppe crue. Sa cohésion est garantie simplement par le collant à cru des produits.

Enfin, la cuisson fait passer le pneu de l'état plastique à l'état élastique grâce à la constitution de ponts de soufre entre les chaînes d'élastomères : c'est la vulcanisation. La cuisson crée la structure composite entre les différents éléments de l'enveloppe. Les mélanges collent entre eux, les nappes et les fils se mêlent. La vulcanisation en moule se réalise dans des presses métalliques en utilisant l'action combinée de la chaleur et de la pression. Le bandage cru ou pneu cru est chauffé simultanément à l'extérieur, par exemple avec de la vapeur circulant à l'intérieur des parois du moule et à l'intérieur, en règle générale avec un fluide chaud sous pression contenu dans une membrane de caoutchouc, appelée aussi vessie dilatable.

Le fluide chaud tel qu'un gaz chaud, de l'eau chaude et/ou de la vapeur, participe au transfert de chaleur pour la vulcanisation.

La pression généralement supérieure à 10 bars, usuellement entre 15 et 25 bars, sert à comprimer le pneumatique de l'intérieur et à l'appliquer contre le moule de façon à ce qu'il puisse prendre la forme, les sculptures et les inscriptions qui ont été gravées dans ledit moule métallique.

Le temps de vulcanisation varie en fonction des dimensions du pneumatique, des techniques opératoires et des mélanges utilisés : il est d'environ 15 minutes pour un pneumatique d'automobile et peut atteindre 24 heures ou plus pour des gros pneumatiques destinés aux engins de terrassement. La température de vulcanisation est en général comprise entre 80 et 220°C.

Cette opération fait perdre au mélange de caoutchouc sa plasticité initiale en lui donnant des propriétés élastiques stables.

L'enveloppe est alors partiellement refroidie dans le moule, ce refroidissement étant parfois favorisé par l'introduction d'eau froide ou plus fraîche dans la vessie. Puis le moule est ouvert et la vessie est dégonflée en relâchant la pression du fluide interne et le pneu vulcanisé est retiré de la presse. Cette utilisation des vessies de vulcanisation est bien connue dans la technique.

Il est admis qu'il se produit un mouvement relatif notable entre la surface de contact externe de la vessie et la surface interne de l'enveloppe crue au cours de la phase de dilatation de la vessie avant la vulcanisation complète de l'enveloppe. De même, il se produit également un mouvement relatif considérable entre la surface de contact externe de la vessie et la surface interne de l'enveloppe moulée et vulcanisée, et cela au cours du dégonflement de la vessie et de l'extraction du pneumatique.

Si une lubrification adéquate n'est pas prévue entre la vessie et la surface interne de l'enveloppe, la vessie a généralement tendance à se gondoler, ce qui entraîne une déformation de l'enveloppe dans le moule et aussi une usure et un dépolissage excessifs de la surface de la vessie elle-même. La surface de la vessie tend également à coller sur la surface interne de l'enveloppe pendant la cuisson. Après la vulcanisation de l'enveloppe et notamment au cours de la partie finale du cycle de vulcanisation de l'enveloppe au cours de laquelle la vessie est dégonflée, celle-ci reste alors indissociablement collé sur le pneumatique.

Il s'agit de démouler deux surfaces en caoutchouc à savoir la surface interne du pneu vulcanisé de la surface externe de la vessie et non pas la surface externe du pneu vulcanisé de la surface interne du moule métallique. EP022706 décrit un agent pour le moulage d'objets en caoutchouc à déposer sur la surface externe de l'ébauche en caoutchouc en contact avec le moule.

De plus, la vessie doit pouvoir être réutilisée sans nouveau traitement pour d'autres cycles moulage/démoulage.

Pour cette raison, la surface externe de la vessie ou la surface interne de l'enveloppe crue ou non vulcanisée est revêtue d'un lubrifiant ou agent de démoulage approprié.

La lubrification de la vessie de vulcanisation peut être effectuée à chaque cycle de moulage/démoulage, on parle alors de mono-démoulage, ou après plusieurs cycles de moulage/démoulage, on parle alors de multi-démoulages. Le multi-démoulages permet aux fabricants de pneumatiques d'améliorer la productivité en réduisant la vitesse d'apparition des défauts et en diminuant la fréquence des traitements par ledit agent de démoulage.

La lubrification de la vessie de vulcanisation utilisée lors du façonnage et de la vulcanisation des pneus crus peut être réalisée de deux façons différentes.

La vessie en caoutchouc dilatable utilisée lors de la vulcanisation des pneus crus est initialement revêtue d'une composition lubrifiante. La lubrification de la vessie est directe.

Selon une alternative, l'agent de démoulage est appliqué sur l'intérieur du pneu cru qui sera en contact avec la vessie dilatable. Puis, le pneu cru est introduit à l'intérieur de la presse. Le moule est refermé et la vessie est gonflée. L'agent de démoulage assure le centrage optimal de la vessie à l'intérieur du pneu ce qui est nécessaire à l'obtention de pneus parfaitement symétriques. Il aide aussi à éviter des défauts de la vessie tels que des pincements et des plissements. Quand le moule métallique est fermé et la vessie totalement déployée, la température est augmentée jusqu'à 220°C. Durant cette phase, l'agent de démoulage doit être résistant à la température et doit transférer, de la face interne du pneu sur la face externe de la vessie. Le pneu est vulcanisé dans la presse fermée, avec la vessie complétement déployée par un fluide sous pression et cela entre 150 et 220°C. Durant cette étape, le pneu ne doit pas coller à la vessie. Le film d'agent de démoulage forme la barrière nécessaire entre le pneu et la vessie. L'effet anti-collage de l'agent de démoulage est assuré par la création d'une couche continue de séparation entre la vessie et la face interne du pneu. C'est la fonction principale d'un agent de démoulage de vessie. Si la barrière a des défauts, la vulcanisation du pneu peut s'effectuer sur le caoutchouc de la vessie, rendant la séparation des deux, impossible sans rupture destructrice. Après vulcanisation, la vessie est dégonflée. L'agent de démoulage doit assurer l'effet anti-collage, permettant à la vessie de se décoller du pneu.

L'avantage de l'application de l'agent de démoulage sur l'intérieur du pneu cru est que celle-ci s'effectue en dehors de la presse évitant ainsi toute pollution intempestive de celle-ci.

Les compositions silicones réticulables en élastomère pour faciliter le moulage-démoulage lors de la fabrication de pneumatiques sont connues, elles sont par exemple décrites dans la revue Tire Technology (Tire release agents, Stefan Breunig, Tire technology International 2013, 68-72).

Ainsi, les brevets EP1240283, EP1495076 et EP2038354 concernent des compositions lubrifiantes à base de siloxanes capables de réticuler par polycondensation et ne dégageant donc pas d'hydrogène. La demande de brevet EP1899447 et le brevet US4840742 concernent des compositions silicones capables de réticuler par deshydrogénocondensation.

Par ailleurs, il est important que le dépôt de l'agent de démoulage sur le pneu ou sur la vessie soit régulier, afin de garantir l'absence de zones non couvertes, lesquelles conduiraient à des difficultés de démoulage ou des défauts d'aspect sur le pneu vulcanisé. Néanmoins, du fait de la couleur noire du pneu et de la vessie, il n'est pas toujours aisé de visualiser facilement où est appliqué l'agent de démoulage. De plus, il est important que l'agent de démoulage ne dégrade pas l'aspect du pneu vulcanisé. Le brevet US5738813A divulgue l'utilisation d'une poudre, dont le point de fusion ne dépasse pas 200°C, dans une composition lubrifiante d'agent de démoulage pour la vulcanisation d'un pneu cru.

Dans ce contexte, un objectif de la présente invention est de fournir un procédé de vulcanisation d'un pneu cru utilisant une composition d'agent de démoulage dont l'application sur le pneu cru ou sur la vessie puisse être contrôlée visuellement, et qui ne dégrade pas l'aspect du pneu vulcanisé.

Un autre objectif de l'invention est de fournir une composition d'agent de démoulage dont l'application sur le pneu cru ou sur la vessie puisse être contrôlée visuellement.

Un autre objectif de l'invention est de fournir une composition d'agent de démoulage dont l'application sur le pneu cru ou sur la vessie puisse être contrôlée visuellement, et qui ne dégrade pas l'aspect du pneu vulcanisé.

**Brève description de l'invention**

Ces objectifs parmi d'autres sont atteints par la présente invention qui concerne en premier lieu un procédé de vulcanisation d'un pneu cru selon la revendication 1.

Le fait d'utiliser une composition lubrifiante d'agent de démoulage (I) comprenant un pigment non fluorescent (C) permet d'obtenir une composition colorée. Dès lors, son application sur le pneu cru ou la vessie permet de former un revêtement coloré visible à l'œil nu. Il est ainsi possible de visualiser facilement, à l'œil nu, où la composition est appliquée. Comme le revêtement coloré est visible à l'œil nu, aucun matériel, type lampe UV, n'est nécessaire pour visualiser où la composition est appliquée. Il est ainsi possible de garantir une application régulière et l'absence de zones non couvertes par l'agent de démoulage.

Par ailleurs, après vulcanisation, la coloration n'est plus visible sur l'intérieur du pneu vulcanisé. La composition lubrifiante d'agent de démoulage (I) perd sa coloration lors de la vulcanisation. Ainsi, l'utilisation de cette composition

lubrifiante d'agent de démoulage **(I)** permet de ne pas modifier l'aspect du pneu vulcanisé.

L'invention concerne également une composition lubrifiante colorée d'agent de démoulage selon la revendication 7.

La présente invention concerne également un procédé de lubrification (P1) d'une vessie en caoutchouc dilatable utile lors d'une vulcanisation d'un pneu cru au sein d'une presse métallique, selon la revendication 13.

La présente invention concerne également un procédé de lubrification (P2) d'une vessie en caoutchouc dilatable utile lors d'une vulcanisation d'un pneu cru au sein d'une presse métallique, selon la revendication 14.

La présente invention concerne également une vessie en caoutchouc dilatable ou un pneu cru, revêtu(e) d'une composition lubrifiante colorée d'agent de démoulage **(I)** selon l'une des revendications 7 à 12.

## Description détaillée

### Procédé de vulcanisation d'un pneu cru

La présente invention concerne en premier lieu un procédé de vulcanisation d'un pneu cru au sein d'une presse métallique mettant en œuvre une vessie en caoutchouc dilatable, ledit procédé comprenant les étapes suivantes :

1. revêtir l'intérieur du pneu cru ou l'extérieur de la vessie en caoutchouc dilatable d'une composition lubrifiante colorée d'agent de démoulage **(I),** sous forme d'émulsion huile dans eau, pour former un revêtement coloré visible à l'œil nu sur le pneu cru ou sur la vessie, ladite composition lubrifiante **(I)** comprenant :

    a. au moins un organopolysiloxane **(A);**
    b. au moins un tensioactif **(B) ;**
    c. au moins un pigment non fluorescent **(C)** choisi parmi le groupe constitué par, selon la classification Colour Index : monoazo, disazo, aminoketone, indigoïde, phthalocyanine, oxazine, inorganique, et leurs mélanges ; et
    d. de l'eau **(D);**
    les quantités de tensioactif(s) et d'eau étant suffisantes pour l'obtention d'une émulsion huile-dans-eau ;

2. gonfler la vessie et vulcaniser le pneu au sein de la presse métallique, de préférence à une température comprise entre 80 et 220°C et pour une durée comprise entre 10 minutes et 24h ; et
3. démouler le pneu ; l'intérieur du pneu obtenu à l'étape 3) ne présentant plus de coloration visible à l'œil nu.

Lors de l'étape 1, la composition lubrifiante colorée d'agent de démoulage **(I)** peut être appliquée à l'intérieur du pneu cru ou l'extérieur de la vessie en caoutchouc dilatable.

Selon un mode de réalisation, c'est l'extérieur de la vessie en caoutchouc dilatable qui est revêtu de la composition **(I).** Dans ce cas, la lubrification de la vessie est directe.

Selon un autre mode de réalisation, c'est l'intérieur du pneu cru qui est revêtu de la composition **(I).** Avantageusement, l'intérieur du pneu cru est revêtu de la composition **(I)** à l'extérieur de la presse. Le pneu cru est ensuite introduit à l'intérieur de la presse, puis, lors du gonflement de la vessie et de la vulcanisation du pneu à l'étape 2, la composition **(I)** transfère, de la face interne du pneu sur la face externe de la vessie. La vessie est alors lubrifiée de façon indirecte.

L'application de la composition lubrifiante colorée d'agent de démoulage **(I)** permet de former un revêtement coloré visible à l'œil nu sur le pneu cru ou sur la vessie. Il est ainsi possible de visualiser facilement où la composition a été appliquée. Par « revêtement coloré visible à l'œil nu », on entend un revêtement, dont la couleur est visible sans l'aide d'aucun appareil de vision.

La quantité de composition lubrifiante colorée d'agent de démoulage **(I)** appliquée sur le pneu cru ou sur la vessie lors de l'étape 1 peut être comprise entre 1 et 50 g/$m^2$, de préférence entre 3 et 20 g/$m^2$.

L'épaisseur du revêtement coloré visible à l'œil nu sur le pneu cru ou sur la vessie peut être comprise entre 1 et 50 $\mu$m, de préférence entre 3 et 20 $\mu$m.

L'étape 1 peut être effectuée en utilisant les méthodes d'application bien connues de l'homme de l'art. En particulier, la composition **(I)** peut être appliquée par pinceau, éponge, ou pulvérisation. L'application par pulvérisation peut être effectuée en plusieurs passages afin de s'assurer que le revêtement est uniforme et homogène.

L'étape 2 de gonflement de la vessie et de vulcanisation du pneu au sein de la presse métallique est de préférence effectuée à une température comprise entre 80 et 220°C et pour une durée comprise entre 5 minutes et 24h, par exemple 20 minutes à 170° C.

Le gonflement de la vessie peut être effectué à l'aide d'un fluide chaud tel qu'un gaz chaud, de l'eau chaude et/ou de la vapeur.

La pression dans la vessie est avantageusement supérieure à 10 bars, de préférence, elle est comprise entre 15

et 25 bars.

Le pneu obtenu à l'étape 3 ne présente plus de coloration visible à l'œil nu. Ainsi, le revêtement coloré visible à l'œil nu sur le pneu cru ou sur la vessie obtenu à l'étape 1 a perdu sa coloration lors de l'étape 2.

Cette perte de coloration peut être déterminée par spectrocolorimétrie, qui mesure la colorimétrie. La colorimétrie permet de définir une couleur en utilisant, par exemple, le modèle CIELAB, c'est-à-dire l'espace chromatique L*a*b* CIE 1976. Ce modèle, bien connu de l'homme du métier, utilise 3 paramètres pour caractériser les couleurs :

- la clarté L qui prend des valeurs entre 0 (noir) et 100 (blanc)
- le paramètre a qui représente une valeur sur un axe vert-rouge
- le paramètre b qui représente une valeur sur un axe bleu-jaune.

Il est également possible de mesurer un écart entre 2 couleurs de la façon suivante :

[Math. 1]

$$Delta\ E = \sqrt{(\Delta L)^2 + (\Delta a)^2 + (\Delta b)^2}\ ,$$

Avec $\Delta L=L_2-L_1$, $\Delta a=a_2-a_1$, et $\Delta b=b_2-b_1$

Ces différents paramètres utilisés pour caractériser les couleurs et les changements de couleurs peuvent être mesurés en utilisant un colorimètre.

La composition lubrifiante colorée d'agent de démoulage (I) forme un revêtement coloré visible à l'œil nu. Ce revêtement est visible à l'œil nu car le contraste entre la composition (I) et le pneu ou la vessie est suffisant. Ce contraste peut être caractérisé par le delta E initial. Ce delta E initial est la différence de couleur entre (i) le pneu cru revêtu ou la vessie revêtue et (ii) le pneu cru sans revêtement ou la vessie sans revêtement. La mesure (i) peut être effectuée après application et séchage de la composition **(I)** sur le pneu cru ou sur la vessie. Le séchage peut être effectué à température ambiante, pour une durée comprise entre 30 minutes et 2 heures, par exemple pour une durée d'1 heure. Avantageusement, ce delta E initial est supérieur ou égal à 5, de préférence supérieur ou égal à 8. Ainsi, le revêtement coloré visible à l'œil nu sur le pneu cru peut être défini comme ayant un delta E initial supérieur ou égal à 5, de préférence supérieur ou égal à 8. Avantageusement, ce delta E initial peut être compris entre 5 et 100, de préférence entre 8 et 50.

En particulier, le revêtement coloré visible à l'œil nu sur le pneu cru ou sur la vessie obtenu à l'étape 1 peut avoir une perte de coloration **(X)** comprise entre 85 et 100%, entre l'étape 1 et l'étape 3, la perte de coloration **(X)** étant déterminée par spectrocolorimétrie de la façon suivante :

[Math. 2]

$$X = 100 * \left|\frac{Delta\ E\ final - Delta\ E\ initial}{Delta\ E\ initial}\right|\ .$$

Le Delta E initial correspond au delta E de la composition **(I)** à l'étape 1 après avoir été déposée sur le pneu cru ou sur la vessie. Ce delta E initial est la différence de couleur entre (i) le pneu cru revêtu ou la vessie revêtue et (ii) le pneu cru sans revêtement ou la vessie sans revêtement. Le delta E final correspond au delta E du revêtement à l'étape 3 après vulcanisation. Ce delta E final est la différence de couleur entre (i) le pneu cru revêtu après étape 3 et (ii) le pneu cru sans revêtement. Ainsi, l'intérieur du pneu obtenu à l'étape 3), qui ne présente plus de coloration visible à l'œil nu, peut être défini comme ayant un delta E final inférieur ou égal à 3, de préférence inférieur ou égal 2. Avantageusement, ce delta E final peut être compris entre 0 et 3, de préférence entre 0 et 2.

De préférence, la perte de coloration **(X)** est comprise entre 90 et 100%.

Cette perte de coloration **(X)** peut en particulier être déterminée après une étape 2 effectuée à 170°C pendant 20 minutes.

## Composition lubrifiante colorée d'agent de démoulage (I)

La composition lubrifiante colorée d'agent de démoulage **(I)** est une émulsion huile dans eau à base d'organopolysiloxanes.

Pour décrire les organopolysiloxanes, on parle de motifs M, D, T, Q. La lettre M représente l'unité monofonctionelle de formule $(R)_3SiO_{1/2}$, l'atome de silicium étant relié à un seul atome d'oxygène dans le polymère comprenant cette unité. La lettre D signifie une unité difonctionnelle $(R)_2SiO_{2/2}$ dans laquelle l'atome de silicium est relié à deux atomes d'oxygène. La lettre T représente une unité trifonctionnelle de formule $(R)SiO_{3/2}$, dans laquelle l'atome de silicium est relié à trois atomes d'oxygène. La lettre Q représente une unité tétrafonctionnelle de formule $SiO_{4/2}$, dans laquelle l'atome de

silicium est relié à quatre atomes d'oxygène. Le symbole R a la même définition que les symboles $R^2$, $R^3$ et $R^4$ définis ci-dessous. Les motifs M, D, T peuvent être fonctionnalisés. On parle alors de motifs M, D, T tout en précisant les radicaux spécifiques.

La composition lubrifiante colorée d'agent de démoulage **(I)** comprend au moins un organopolysiloxane **(A),** qui peut être choisi parmi le groupe constitué par :

- les organopolysiloxanes non réactifs **(E)** qui, par molécule, ont des substituants organiques monovalents, identiques ou différents entre eux, liés aux atomes de silicium, et qui sont choisis parmi le groupe constitué par les radicaux alkyles en $C_1$-$C_{40}$, cycloalkyles en $C_3$-$C_8$, aryles en $C_6$-$C_{10}$ et alkylaryles en $C_7$-$C_{50}$ ;
- les organopolysiloxanes réactifs **(F)** comportant par molécule au moins deux groupements silanols =SiOH ;
- et leurs mélanges.

La composition lubrifiante colorée d'agent de démoulage **(I)** peut comprendre de 0,1 à 60 parties en poids d'au moins un polyorganosiloxane non réactif **(E),** de préférence de 0,1 à 30 parties en poids.

La composition lubrifiante colorée d'agent de démoulage **(I)** peut comprendre de 0,1 à 60 parties en poids d'au moins un polyorganosiloxane réactif **(F),** de préférence de 0,1 à 30 parties en poids.

Dans le cadre de l'invention, on entend par "non réactif" un organopolysiloxane qui dans les conditions d'émulsification, de préparation de la composition lubrifiante et d'utilisation, ne réagit chimiquement avec aucun des constituants de la composition.

L'organopolysiloxane non réactif **(E)** peut être une huile ou une gomme, et présente, de préférence une viscosité dynamique comprise entre 50 et 600000 mPa.s à 25°C ou une consistance comprise entre 200 et 2000 exprimée en dixièmes de millimètres à 25°C.

La viscosité dynamique des silicones est mesurée à 25°C selon la norme ASTM D 445.

Le terme gomme est utilisé pour des composés organosiliciques présentant des viscosités classiquement supérieures à -600000 mPa.s ce qui correspond à un poids moléculaire supérieur à 260000 g/mole.

La consistance ou pénétrabilité d'une gomme est déterminée à 25°C au moyen d'un pénétromètre de type PNR12 ou modèle équivalent permettant d'appliquer sur l'échantillon une tête cylindrique dans des conditions normalisées.

La pénétrabilité d'une gomme est la profondeur exprimée en dixième de millimètres à laquelle un cylindre calibré pénètre dans l'échantillon pendant une minute.

A cet effet, un échantillon de gomme est introduit dans un godet en aluminium de diamètre 40 mm et d'une hauteur de 60 mm. La tête cylindrique en bronze ou en laiton mesure 6,35 mm de diamètre et 4,76 mm de hauteur et est portée par une tige métallique de 51 mm de long et de 3mm de diamètre qui s'adapte au pénétromètre. Cette tige est lestée d'une surcharge de 100 g. Le poids total de l'ensemble est de 151,8g dont 4,3 pour la pièce cylindrique et sa tige support. Le godet contenant l'échantillon de gomme est mis dans le bain thermostaté à 25 $\pm$ 0,5 °C pendant au minimum 30mn. La mesure est effectuée en suivant la notice du constructeur. Les valeurs de la profondeur (V) en dixième de millimètre et du temps (t) en secondes pour atteindre cette profondeur sont indiquées sur l'appareil. La pénétrabilité est égale à 60V/t exprimée en dixièmes de millimètre par minute.

Les gommes d'organopolysiloxane non réactif **(E)** utilisables conformément à l'invention sont utilisées seules ou en mélange dans un solvant inorganique. Ce solvant peut être choisi parmi les silicones volatiles, l'octamethylcyclotetrasiloxane (D4), le decamethylcylopentasiloxane (D5), les huiles polydiméthylsiloxanes (PDMS), les huiles polyphénylméthylsiloxanes (PPMS) ou leurs mélanges et cela afin d'éviter l'utilisation de solvants organiques préjudiciables à l'environnement et à la santé des travailleurs des ateliers de fabrication des pneumatiques.

Avantageusement, l'organopolysiloxane non réactif **(E)** est une huile organopolysiloxane linéaire non réactive **(E)** qui est un homopolymère ou un copolymère linéaire. De préférence l'huile organopolysiloxane linéaire non réactive **(E)** présente une viscosité dynamique de l'ordre de 0,65 à 100000 mPa.s à 25°C. Comme exemple, on peut citer les organopolysiloxanes linéaires :

- constitués le long de chaque chaîne:

    a. des motifs de formule $R^5R^6SiO_{2/2}$, éventuellement associés à des motifs de formule $(R^5)_2SiO_{2/2}$;

    b. des motifs de formule $(R^6)_2SiO_{2/2}$, éventuellement associés à des motifs de formule $(R^5)_2SiO_{2/2}$,

    c. des motifs de formule $R^5R^6SiO_{2/2}$ et des motifs de formule $(R^6)_2SiO_{2/2}$, éventuellement associés à des motifs de formule $(R^5)_2SiO_{2/2}$,

- et bloqués à chaque extrémité de chaîne par un motif de formule $(R^7)_3SiO_{1/2}$ dont les radicaux $R^7$, identiques ou

différents, sont choisis parmi des radicaux $R^5$ et $R^6$,

- où les radicaux $R^5$ et $R^6$, substituants organiques monovalents des divers motifs siloxyles mentionnés supra, ont les définitions suivantes :

    a. les radicaux $R^5$, identiques ou différents entre eux, sont choisis parmi;

        i. les radicaux alkyles linéaires en $C_1$-$C_6$ ou ramifiés en $C_3$-$C_6$ tels que par exemple méthyle, éthyle, propyle, isopropyle, butyle, isobutyle, t-butyle, n-pentyle, n-hexyle, et

        ii. les radicaux cycloalkyles en $C_3$-$C_8$ tels que par exemple cyclopentyle, cyclohexyle,

    b. les radicaux $R^6$, identiques ou différents entre eux, sont choisis parmi

        i. les radicaux aryles en $C_6$-$C_{10}$ tels que par exemple phényle, naphtyle,

        ii. les radicaux alkylaryles en $C_7$-$C_{15}$ tels que par exemple tolyles, xylyle, et

        iii. les radicaux arylalkyles en $C_7$-$C_{15}$ tels que par exemple benzyle.

L'organopolysiloxane réactif (F) peut être une huile ou une gomme, et présente, de préférence une viscosité dynamique comprise entre 50 et 600000 mPa.s à 25°C ou une consistance comprise entre 200 et 2000 exprimée en dixièmes de millimètres à 25°C.

De préférence, l'organopolysiloxane réactif **(F)** de la composition lubrifiante colorée d'agent de démoulage **(I)** comprend les motifs siloxyles suivants :
$M^{OH} = [(OH)(R^2)_2SiO_{1/2}]$ et $D= [R^3R^4SiO_{2/2}]$
dans lesquels:
$R^2$, $R^3$ et $R^4$ sont des radicaux, identiques ou différents, choisis parmi le groupe constitué par :

- les radicaux alkyles linéaires ou ramifiés en $C_1$-$C_6$ tels que par exemple méthyle, éthyle, propyle, isopropyle, butyle, isobutyle, t-butyle, n-pentyle, n-hexyle ;
- les radicaux cycloalkyles en $C_3$-$C_8$ tels que par exemple cyclopentyle, cyclohexyle ;
- les radicaux aryles en $C_6$-$C_{10}$ tels que par exemple phényle, naphtyle ; et
- les radicaux alkylaryles en $C_7$-$C_{15}$ tels que par exemple tolyle, xylyle.

De façon encore plus préférentielle, l'organopolysiloxane réactif **(F)** de la composition d'agent de démoulage **(I)** est un $\alpha$, $\omega$-bis(hydroxy) polydimethylsiloxane ce qui signifie que les radicaux $R^2$, $R^3$ et $R^4$ des motifs siloxyles de l'organopolysiloxane réactif **(F)** sont des radicaux méthyles.

Les gommes d'organopolysiloxane réactif **(F)** conformément à l'invention sont utilisées seules ou en mélange dans un solvant inorganique. Ce solvant peut être choisi parmi les silicones volatiles, l'octamethylcyclotetrasiloxane (D4), le decamethylcylopentasiloxane (D5), les huiles polydiméthylsiloxanes (PDMS), les huiles polyphénylméthylsiloxanes (PPMS) ou leurs mélanges et cela afin d'éviter l'utilisation de solvants organiques préjudiciables à l'environnement et à la santé des travailleurs des ateliers de fabrication des pneumatiques.

Une huile $\alpha$, $\omega$-bis(hydroxy) polydimethylsiloxane de viscosité dynamique comprise entre 50 et 600000 mPa.s à 25°C et une gomme $\alpha$, $\omega$-bis(hydroxy) polydimethylsiloxane de consistance comprise entre 200 et 2000 exprimée en dixièmes de millimètres à 25°C sont préférentiellement utilisées en tant que constituants **(F).**

La composition lubrifiante colorée d'agent de démoulage comprend également un tensioactif **(B).** La nature de tensioactif **(B)** sera facilement déterminée par l'homme du métier, l'objectif étant de préparer une émulsion stable. Les tensioactifs anioniques, cationiques, non-ioniques et zwitterioniques peuvent être employés seuls ou en mélange.

Il est à noter que la composition **(I)** selon l'invention peut aussi comprendre des colloïdes protecteurs tels que l'alcool polyvinylique.

A titre de tensioactif anionique, on peut mentionner les agents tensio-actifs suivants

- les alkylesters sulfonates de formule $R^a$-$CH(SO_3M)$-$COOR^b$, où $R^a$ représente un radical alkyle en $C_8$-$C_{20}$, de préférence en $C_{10}$-$C_{16}$, $R^b$ un radical alkyle en $C_1$-$C_6$, de préférence en $C_1$-$C_3$ et M un cation alcalin (sodium, potassium, lithium), ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine)
- les alkylsulfates de formule $R^cOSO_3M$, où $R^c$ représente un radical alkyle ou hydroxyalkyle en $C_{10}$-$C_{24}$, de préférence en $C_{12}$- $C_{20}$, M représentant un atome d'hydrogène ou un cation de même définition que ci- dessus, ainsi que leurs

dérivés éthoxylénés (OE) et/ou propoxylénés (OP), présentant de préférence de 1 à 20 motifs OE,

- les alkylamides sulfates de formule $R^dCONHR^eOSO_3M$ où $R^d$ représente un radical alkyle en $C_2$-$C_{22}$, de préférence en $C_6$-$C_{20}$, $R^e$ un radical alkyle en $C_2$-$C_3$, M représentant un atome d'hydrogène ou un cation de même définition que ci-dessus, ainsi que leurs dérivés éthoxylénés (OE) et/ou propoxylénés (OP), présentant de préférence 1 à 20 motifs OE,
- les sels d'acides gras saturés ou insaturés en $C_8$-$C_{24}$, de préférence en $C_{14}$-$C_{20}$, les alkylbenzènesulfonates en $C_9$-$C_{20}$, ainsi que leurs dérivés éthoxylénés (OE) et/ou propoxylénés (OP), présentant de préférence 1 à 20 motifs OE, - les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les mono- et dialkylphosphates, les alkyliséthionates, les alkylsuccinamates, les alkylsulfosuccinates, les monoesters ou diesters de sulfosuccinates, les N-acyl sarcosinates, les sulfates d'alkylglycosides, les polyéthoxycarboxylates, le cation étant un métal alcalin (sodium, potassium, lithium), un reste ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine).

A titre de tensioactifs non-ioniques on peut citer les éthers alkyliques ou aryliques de poly(oxyde d'alkylène), l'hexastéarate de sorbitan polyoxyéthyléné, l'oléate de sorbitan polyoxyéthyléné et les éthers de cétylstéaryle et de poly(oxyde d'éthylène). A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol, l'éther isotridécylique de polyéthylèneglycol, et l'éther triméthylnonylique de polyéthylèneglycol contenant de 3 à 15 unités d'oxyde d'éthylène par molécule.

A titre de tensioactifs non-ioniques on peut également citer les tensioactifs non-ioniques siliconés et en particulier, les silicones polyéther. Ces tensioactifs sont également connus sous le nom de copolymères organopolysiloxane-polyéther. De préférence, il s'agit d'un copolymère organopolysiloxane-polyoxyalkylène comprenant des motifs siloxyles ayant des séquences de chaines d'oxyde d'éthylène, et, éventuellement, des séquences de chaines d'oxyde de propylène.

On peut aussi citer à titre d'exemple de tensioactifs: les tensioactifs fluorés ioniques, non ioniques ou amphotères et leurs mélanges, par exemple :

- les perfluoroalkyles,
- les perfluorobétaïnes,
- les polyfluoroalcools éthoxylés,
- les polyfluoroalkyles d'ammonium,
- les agents tensioactifs dont la partie hydrophile contient un ou plusieurs motif(s) saccharide(s) porteur(s) de cinq à six atomes de carbone et dont la partie hydrophobe contient un motif de formule $R^f(CH_2)_n$-, dans laquelle n = 2 à 20 et Rf représente un motif perfluoroalkyle de formule $C_mF_{2m+1}$, dans laquelle m = 1 à 10; et
- les polyélectrolytes présentant des groupements latéraux perfluoroalkyles gras.

Par agent tensioactif fluoré, on entend, comme cela est parfaitement connu en soi, un composé formé d'une partie perfluorocarbonée aliphatique, comprenant au moins trois atomes de carbone, et une partie hydrophile, ionique, non ionique ou amphotère. La partie perfluorocarbonée d'au moins trois atomes de carbone peut représenter, soit l'ensemble, soit une fraction seulement de la partie fluorocarbonée de la molécule. Concernant ce type de composé, on trouve dans la littérature un grand nombre de références. L'homme du métier pourra se reporter notamment aux références suivantes

- FR-A-2 149 519, WO-A-94 21 233, US-A-3,194,767, l'ouvrage "Fluorinated Surfactants", Erik Kissa, Editeur Marcel Dekker Inc. (1994) Chapitre 4, notamment les Tableaux 4.1 et 4.4.

On peut citer, en particulier, les produits vendus par la société Du Pont sous la dénomination ZONYL®, par exemple FSO, FSN-100, FS-300, FSD, ainsi que les tensioactifs fluorés de dénomination FORAFAC® distribués par la société DU PONT et les produits vendus sous la dénomination FLUORAD® par la Société 3M.

Parmi ces tensioactifs, on citera, en particulier, les composés perfluoroalkylés anioniques, cationiques, non-ioniques et amphotères, et parmi eux, plus particulièrement, les tensioactifs de la classe des ZONYL®, commercialisés par Du Pont respectivement sous les dénominations ZONYL® FSA, ZONYL® FSO, ZONYL® FSC et ZONYL® FSK.

On peut encore préciser à leur propos :

- ZONYL® FSO 100 : CAS 65545-80-4, (non-ionique) 99 à 100 %, le reste étant du 1,4-dioxane
- ZONYL® FSN : CAS 65545-80-4, 99 à 100 %, le reste étant de l'acétate de sodium et du 1,4-dioxane

- ZONYL® FS-300 : CAS 65545-80-4, 40 %, le reste étant de 1,4-dioxane (< 0,1%) et de l'eau
- ZONYLOFSD : CAS 70983-60-7 30 %, (cationique), le reste étant de l'hèxylèneglycol (10 %), du chlorure de sodium (3 %) et de l'eau (57 %).

On peut encore citer :

- les perfluoroalkyl bétaïnes (amphotères) telles que celle commercialisée par DU PONT sous la dénomination FORAFAC® 1157, les polyfluoroalcools éthoxylés (non-ioniques), tels que celui commercialisé par DU PONT sous la dénomination FORAFAC 1110 D, les sels polyfluoroalkyl d'ammonium (cationiques), tels que celui commercialisé par DU PONT sous la dénomination FORAFAC 1179,
- les agents tensioactifs dont la partie hydrophile contient un ou plusieurs motif(s) saccharide(s) contenant de 5 à 6 atomes de carbone (motifs dérivés de sucres comme le fructose, le glucose, le mannose, le galactose, le talose, le gulose, l'allose, l'altose, l'idose, l'arabinose, le xylose, le lyxose et/ou le ribose) et dont la partie hydrophobe contient un motif de formule $R^F(CH_2)_n$, où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les monoesters d'acides gras perfluoroalkylés et de sucres comme le sucrose, la fonction monoester pouvant être représentée par la formule $R^F(CH_2)_nC(O)$, où n peut aller de 2 à 10 et $R^F$ représente un motif perfluoroalkyle de formule $C_mF_{2m+1}$ avec m pouvant aller de 4 à 8, décrits dans journal of the american oil chemists' society (JAOCS), Vol. 69, no. 1 (janvier 1992) et choisis parmi ceux présentant les caractéristiques définies ci-dessus; et
- les polyélectrolytes présentant des groupements latéraux perfluoroalkyles gras tels que les polyacrylates présentant des groupements $R^F(CH_2)_n$ où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les polyacrylates présentant des groupements $-CH_2C_7F_{15}$ décrits dans J. Chim. Phys. (1996) 93, 887-898 et choisis parmi ceux présentant les caractéristiques définies ci-dessus.

La quantité de tensioactif **(B)** est fonction du type de chacun des constituants en présence ainsi que de la nature même du tensioactif utilisé. En règle générale, l'émulsion comprend de 0,5 à 10% en poids de tensioactif par rapport au poids total de l'émulsion.

La composition lubrifiante colorée d'agent de démoulage **(I)** comprend également un pigment non fluorescent **(C).**

Par « pigment», on entend toute substance colorée. Dans le cadre de la présente invention, le terme « pigment » est à prendre au sens large et inclut les colorants. En général, les pigments sont insolubles dans le milieu qu'ils colorent.

Par « non-fluorescent », on entend un composé qui n'est pas capable d'absorber de l'énergie lumineuse et de la réémettre sous forme de lumière.

Selon l'invention, le pigment non fluorescent **(C)** est choisi parmi le groupe constitué par (selon la classification Colour Index) : monoazo, disazo, aminoketone, indigoïde, phthalocyanine, oxazine, inorganique, et leurs mélanges, de préférence sous forme de dispersion aqueuse.

La classification Colour index (CI) est bien connue de l'homme du métier. Il s'agit d'une base de données de référence publiée par la *Society of Dyers and Colourists* et par *l'American Association of Textile Chemists and Colorists.* Cette base de données référence les couleurs manufacturées et les produits associés. Les produits sont listés en fonction de noms (Colour Index Generic Name, CIGN) et de numéros génériques (Colour Index Constitution Number, CICN).

Les numéros génériques associés aux pigments non fluorescents **(C)** sont les suivants : monoazo (CICN 11000-19999), disazo (CICN 20000-29999), aminoketone (CICN 56000-56999), indigoïde (CICN 73000-73999), phthalocyanine (CICN 74000-74999), oxazine (CICN 51000-51999), inorganique (CICN 77000-77999).

De préférence, le pigment non fluorescent **(C)** est organique, et est choisi parmi le groupe constitué par (selon la classification Colour Index) : monoazo, disazo, aminoketone, indigoïde, phthalocyanine, oxazine, et leurs mélanges.

De préférence, le pigment non fluorescent **(C)** est choisi parmi le groupe constitué par (selon la classification Colour Index) : monoazo, disazo et phthalocyanine, et leurs mélanges. De façon plus préférentielle, le pigment non fluorescent **(C)** est choisi parmi le groupe constitué par (selon la classification Colour Index) : monoazo et disazo.

Avantageusement, le pigment non fluorescent **(C)** est choisi parmi les pigments rouges, jaunes, oranges, verts, bleus, violets, et leurs mélanges. De préférence le pigment non fluorescent **(C)** est choisi parmi les pigments rouges, jaunes, et oranges.

Selon un mode de réalisation particulier, le pigment non fluorescent **(C)** peut être le pigment Yellow 3 (PY3, CICN 11710) ou un pigment Red 2 (PR2, CICN 12310).

Le pigment non fluorescent **(C)** est de préférence sous forme de dispersion aqueuse. Parmi les pigments non fluorescents **(C)** sous forme de dispersion aqueuse, on peut citer ceux vendus sous l'appellation Aquacolors de la société

Sioen.

La composition lubrifiante colorée d'agent de démoulage **(I)** peut comprendre entre 0,01% et 3% en poids de pigment non fluorescent **(C)** par rapport au poids total de la composition **(I),** de préférence entre 0,1 et 2,5% en poids. L'homme du métier saura ajuster la quantité de pigment en fonction de sa nature et de l'épaisseur du revêtement voulu. En particulier, l'homme du métier saura ajuster la quantité de pigment pour que le contraste initial sur le pneu soit suffisant et que le revêtement soit visible à l'œil nu.

La composition lubrifiante colorée d'agent de démoulage **(I)** peut également comprendre en outre (i) au moins un agent réticulant **(G)** ayant, par molécule, au moins trois motifs =SiH, et/ou (ii) un catalyseur **(H).**

De préférence l'agent réticulant **(G)** de la composition d'agent de démoulage **(I)** est un organopolysiloxane choisi parmi ceux qui possèdent au moins un motif de formule (II) et qui sont terminés par des motifs de formule (III) ou des cycliques constitués de motifs de formule (II) représentées ci-dessous :

[Chem. 1]

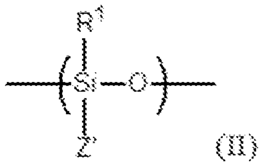
(II)
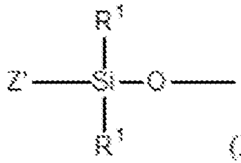
(III)

dans lesquelles :

- les symboles $R^1$, sont identiques ou différents et représentent :
  - a. un radical alkyle linéaire ou ramifié contenant 1 à 8 atomes de carbone, non substitué ou substitué par au moins un fluor;
  - b. un radical cycloalkyle contenant entre 5 et 8 atomes de carbone cycliques,
  - c. un radical aryle contenant entre 6 et 12 atomes de carbone, ou
  - d. un radical aralkyle ayant une partie alkyle contenant entre 7 et 14 atomes de carbone et une partie aryle contenant entre 6 et 12 atomes de carbone, non substitué ou substitué sur la partie aryle par des halogènes, des alkyles et/ou des alcoxyles contenant 1 à 3 atomes de carbone,
- les symboles Z' sont identiques ou différents et représentent :
  - a. un radical hydrogène, ou;
  - b. un groupement répondant à la même définition que celle donnée ci-dessus pour $R^1$, et
    avec par molécule, au moins trois des symboles Z' représentant un radical hydrogène H.

Comme exemple d'agent réticulant **(G)** on peut citer le composé de formule (IV) suivante :

[Chem. 2]

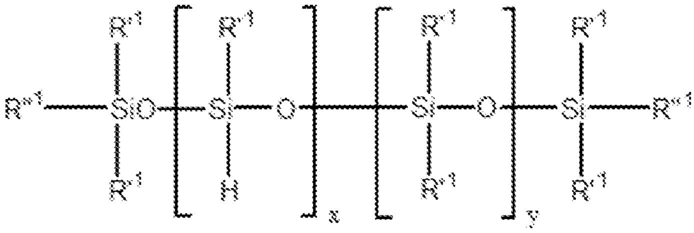
(IV)

dans laquelle :

- x représente un nombre entier ou fractionnaire variant entre 1 et 10000,

- y représente un nombre entier ou fractionnaire variant entre 0 et 10000,
- $R'^1$ et $R''^1$ représentent indépendamment l'un de l'autre :

  a. un radical alkyle linéaire ou ramifié contenant 1 à 8 atomes de carbone, non substitué ou substitué par au moins un halogène, de préférence le fluor, les radicaux alkyles étant de préférence méthyle, éthyle, propyle, octyle et 3,3,3-trifluoropropyle;

  b. un radical cycloalkyle contenant entre 5 et 8 atomes de carbone cycliques,

  c. un radical aryle contenant entre 6 et 12 atomes de carbone, ou

  d. un radical aralkyle ayant une partie alkyle contenant entre 5 et 14 atomes de carbone et une partie aryle contenant entre 6 et 12 atomes de carbone, non substitué ou substituée sur la partie aryle,

- $R''^1$ pouvant également correspondre à l'hydrogène, et

avec la condition selon laquelle le organopolysiloxane comprend au moins trois motifs =SiH.

Conviennent tout particulièrement à l'invention à titre d'agent réticulant **(G)** les composés suivants :

[Chem. 3]

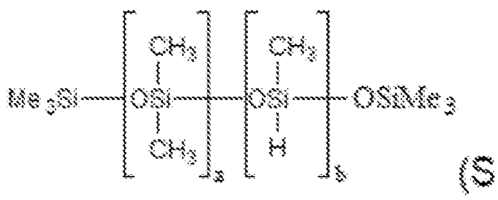

(S1)

[Chem. 4]

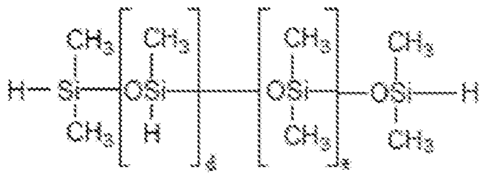

(S2)

avec a, b, d et e représentant un nombre variant de :

- - dans le polymère de formule S1 :

  $0 \leq a \leq 10000$ de préférence $0 \leq a \leq 8000$ de préférence $0 \leq a \leq 5000$, et
  $3 \leq b \leq 10000$ de préférence $10 \leq b \leq 100$ de préférence $20 \leq b \leq 60$

- - dans le polymère de formule S2 :

  $1 \leq d \leq 10000$ de préférence $20 \leq d \leq 60$, et
  $0 \leq e \leq 10000$ de préférence $0 \leq e \leq 1000$.

Les organopolysiloxanes de la composition lubrifiante colorée d'agent de démoulage **(I)** peuvent être polymérisables et/ou réticulables (i) par polycondensation, dans le cas où la composition comprend un organopolysiloxanes réactif **(F)** comportant par molécule au moins deux groupements silanols =SiOH, ou (ii) par déshydrogéno-condensation, dans le cas où la composition comprend un organopolysiloxanes réactif **(F)** comportant par molécule au moins deux groupements silanols =SiOH et un agent réticulant **(G)** ayant, par molécule, au moins trois motifs =SiH (≡SiH + =SiOH ---> =Si - O - Si= + $H_2$ (g)).

A cet effet, au moins un catalyseur **(H)** peut être utilisé. Le catalyseur peut être un catalyseur de polycondensation ou un catalyseur de déshydrogéno-condensation **(H).** La présence du catalyseur n'est qu'optionnelle du fait des

températures rencontrées dans le cadre de l'application.

Des exemples de catalyseurs de polycondensation ou de déshydrogéno-condensation utilisables dans le cadre de l'invention sont les sels organométalliques, et les titanates tels que l'orthotitanate de tétrabutyle.

A titre de sel organométallique, on peut mentionner le naphténate de zirconium et l'octylate de zirconium.

On peut aussi utiliser un composé catalytique à l'étain, généralement un sel d'organoétain. Les sels d'organoétain utilisables sont décrits en particulier dans l'ouvrage de NOLL, Chemistry and Technology of Silicones Academic Press (1968), page 397. On peut également définir comme composé catalytique à l'étain, soit des distannoxanes, soit des polyorganostannoxanes, soit le produit de réaction d'un sel d'étain, en particulier d'un dicarboxylate d'étain sur du polysilicate d'éthyle, comme décrit dans le brevet US-A-3 862 919.

Le produit de réaction d'un silicate d'alkyle ou d'un alkyltrialcoxysilane sur le diacétate de dibutylétain comme décrit dans le brevet belge BE-A-842 305, peut convenir aussi.

Selon une autre possibilité, on peut avoir recours à un sel d'étain II, tel que $SnCl_2$ ou l'octoate stanneux. Le catalyseur peut être un sel d'étain d'un acide organique, tels que le diacétate de dibutylétain, le dilaurate de dibutylétain, le dilaurate de dioctylétain, le dioctate de dibutylétain, l'octylate de cobalt et le di(isomercaptoacétate) de dioctylétain. Des exemples de sels d'étain tels que les bischélates d'étain sont décrits dans les demandes de brevet EP-A-147 323 et EP-A-235 049, les dicarboxylates de diorganoétain et, en particulier, les catalyseurs sont décrits dans le brevet britannique GB-A-1 289 900 (diacétate de dibutyl- ou de dioctylétain, le dilaurate de dibutyl- ou de dioctylétain.

Des catalyseurs sans étain sont aussi décrits dans les demandes de brevet WO2010/146253, WO2010146254, WO2010/149869, WO2010/149870 et WO2013/004926.

Le catalyseur **(H),** lorsqu'il est présent, est généralement introduit dans l'émulsion à raison de 0,05 à 5 parties en poids, par rapport au poids total de l'émulsion.

La composition lubrifiante colorée d'agent de démoulage **(I)** peut également comprendre un agent d'évacuation de l'air **(J).** Parmi les agents d'évacuation d'air, on peut citer les micas, le talc, le noir de carbone, et les billes de verre.

Selon un mode de réalisation préféré, l'agent d'évacuation de l'air **(J)** est des billes de verre.

La composition chimique des billes de verre peut être de type sodocalcique ou borosilicate. La majeure partie des verres de fabrication industrielle appartient au type sodocalcique, soda-lime glass pour les anglophones. Celui-ci se compose majoritairement de 71 à 75% de sable (SiO2), de 12 à 16% de soude (Na2O) et de 8 à 15% de calcaire (CaO). Les verres borosilicates, borosilicate pour les anglophones, se distinguent des verres sodocalciques par la présence d'oxyde de bore ($B_2O_3$) et d'oxyde d'aluminium ($Al_2O_3$).

Le verre est un matériau amorphe, c'est-à-dire non cristallin. De ce fait, il présente un désordre structural important. Sa structure microscopique est telle qu'il n'existe aucun ordre à grande distance dans un verre.

Il s'agit de billes de verre pleines c'est-à-dire non creuses. Elles peuvent être revêtues en surface par des agents de couplage de type silanes.

De préférence, les billes de verre présentent les caractéristiques suivantes :

- un diamètre moyen des particules mesuré selon la norme ISO 13320 compris entre 0,1 et 150 μm,
- une densité apparente mesurée selon ASTM D 3101-78 comprise entre 1000 et 2000 kg/m$^3$, et
- une absorption d'huile mesurée selon ASTM D-1483 comprise entre 10 et 30 g d'huile pour 100g de sphères.

De façon encore plus préférentielle, les billes de verre **(D)** présentent les caractéristiques suivantes :

- un diamètre moyen des particules mesuré selon la norme ISO 13320 compris entre 0,5 et 100 μm,
- une densité apparente selon ASTM D 3101-78 comprise entre 1200 et 1800 kg/m$^3$, et
- une absorption d'huile selon ASTM D-1483 comprise entre 15 et 25 g d'huile pour 100g de sphères.

De façon encore plus préférentielle, les billes de verre (D) présentent un diamètre moyen mesuré selon la norme ISO 13320 compris entre 12 et 70μm.

La présence de billes de verre permet d'obtenir un bon échappement d'air lors de la vulcanisation.

La quantité d'agent d'évacuation de l'air **(J),** et en particulier de billes de verre, dans la composition d'agent de démoulage **(I)** varie entre 0,1 et 20 % en poids et de préférence entre 0,1 et 15 % en poids par rapport au poids total de la composition.

Par ailleurs, de manière classique et non limitative, on peut également mettre en oeuvre dans la composition lubrifiante colorée d'agent de démoulage **(I)** des additifs **(K)** tels que des polymères filmogènes, des adjuvants anti-mousses, des biocides, des modificateurs de rhéologie, des agents de coalescence, des agents dispersants, des agents acidifiants, neutralisants, des bases et/ou des agents épaississants seuls ou en mélange.

Les concentrations de tels adjuvants sont connues de l'homme du métier.

L'eau **(D)** est présente dans la composition lubrifiante colorée d'agent de démoulage **(I),** de préférence, dans des proportions comprises entre 20 et 90% et de préférence, entre 30 et 80% en poids par rapport au poids total de la

composition.

La composition lubrifiante colorée d'agent de démoulage **(I)** peut avoir une perte de coloration **(X)** comprise entre 85 et 100%, après dépose de la composition sur une vessie dilatable de vulcanisation ou sur un pneu cru, et traitement thermique à 170°C pendant 20 minutes, la perte de coloration **(X)** étant déterminée par spectrocolorimétrie de la façon suivante :

[Math. 3]

$$X = 100 * \left| \frac{Delta\ E\ final - Delta\ E\ initial}{Delta\ E\ initial} \right| .$$

De préférence, la perte de coloration **(X)** est comprise entre 90 et 100%.

Le delta E initial est la différence de couleur entre (i) la vessie ou le pneu revêtu(e) et (ii) la vessie ou le pneu sans revêtement. Le delta E final est la différence de couleur entre (i) la vessie ou le pneu revêtu(e) après traitement thermique et (ii) la vessie ou le pneu sans revêtement.

Selon un autre mode de réalisation, la composition lubrifiante colorée d'agent de démoulage **(I)** comprend

- de 0,1 à 60 parties en poids d'au moins un polyorganosiloxane **(A),** de préférence de 0,1 à 30 parties en poids,
- de 0,1 à 10 parties en poids d'au moins un tensioactif **(B)**
- de 0,01 à 3 parties en poids d'au moins un pigment non fluorescent **(C),**
- de 20 à 90 parties en poids d'eau **(D),** de préférence de 30 à 80 parties en poids,
- de 0 à 20 parties en poids d'au moins un agent réticulant **(G),**
- de 0 à 5 parties en poids d'au moins un catalyseur **(H),**
- de 0 à 20 parties en poids d'un agent d'évacuation de l'air **(J),** de préférence de 0,1 à 15 parties en poids,
- de 0 à 5 parties en poids d'au moins un additif **(K),**

pour 100 parties en poids de la somme des constituants **(A), (B), (C), (D), (G), (H), (J),** et **(K).**

Les compositions selon l'invention sont stables dans le temps et les revêtements silicone préparés à partir des compositions selon l'invention présentent de bonnes propriétés de lubrification (Kd < 0.7), et un bon échappement d'air lorsque la composition comprend des billes de verres. Dans le cas de multi-démoulages, les compositions selon l'invention présentent une bonne résistance aux démoulages successifs.

**Procédé de lubrification**

Un autre objet de la présente invention concerne un procédé de lubrification **(P1)** d'une vessie en caoutchouc dilatable utile lors d'une vulcanisation d'un pneu cru au sein d'une presse métallique, caractérisé en ce que la surface externe de ladite vessie amenée à être en contact avec la face interne dudit pneu cru est revêtue d'une composition d'agent de démoulage **(I)** sous forme d'émulsion huile dans eau.

Un autre objet de la présente invention concerne un procédé de lubrification **(P2)** d'une vessie en caoutchouc dilatable utile lors d'une vulcanisation d'un pneu cru au sein d'une presse métallique, caractérisé en ce que dans une première étape à l'extérieur de la presse, la surface interne dudit pneu cru est revêtue d'une composition d'agent de démoulage **(I)** sous forme d'émulsion huile dans eau.

La composition d'agent de démoulage **(I)** peut être utilisée à chaque cycle de moulage/démoulage (mono-démoulage) ou après plusieurs cycles de moulage/démoulage (multi-démoulages). Dans le cas du multi-démoulages, le nombre de cycles de moulage de pneu cru et de démoulage de pneu vulcanisé est supérieur ou égal à 3.

Les méthodes d'application des traitements sont bien connues de l'homme de l'art. On peut particulièrement les appliquer par pinceau, éponge, pulvérisation.

L'application par pulvérisation peut être effectuée en plusieurs passages afin de s'assurer que le revêtement est uniforme et homogène.

Plus particulièrement, l'invention concerne

- une vessie en caoutchouc, dilatable, revêtue sur sa surface externe d'une composition **(I)** selon l'invention, pour le façonnage et la vulcanisation de pneus crus,
- une vessie en caoutchouc dilatable pouvant être obtenue par chauffage de la vessie dilatable définie ci-dessus, notamment entre 80 et 220° C, de préférence entre 150 et 200° C,
- un pneu cru revêtu sur sa surface interne d'une composition lubrifiante (I) selon l'invention, et
- un pneu vulcanisé, pouvant être obtenu par chauffage du pneu cru défini ci-dessus, notamment entre 80 et 220° C, de préférence entre 150 et 200° C.

D'autres avantages et caractéristiques de la présente invention apparaîtront à la lecture des exemples suivants donnés à titre illustratif nullement limitatif.

## Exemples

### Matières premières utilisées

**Bluesil® Emulsion 211** - Sté Elkem Silicones : émulsion d'huile polydimethylsiloxane **(A)** comprenant un tensioactif **(B),** la viscosité de l'huile étant approximativement de 350mPa.s à 25°C

**Bluesil® Emulsion 284** - Sté Elkem Silicones : émulsion d'huile α, ω-bis(hydroxy) polydimethylsiloxane **(A)** comprenant un tensioactif **(B),** la viscosité de l'huile étant approximativement de 135 000 mPa.s à 25°C

**Bluesil® Emulsion 247G** - Sté Elkem Silicones : émulsion d'un mélange de gomme α, ω-bis(hydroxy) polydimethylsiloxane **(A),** de consistance approximativement 700 exprimé en dixième de millimètre à 25°C, et d'huile polydimethylsiloxane **(A)** de viscosité approximativement 50 mPa.s à 25°C, et comprenant un tensioactif **(B)**

**Lyndcoat® BR 2430** - vendue Sté Elkem Silicones : émulsion lubrifiante

**GlassyCoat® C3 SP 20-60 TO** vendue par la Sté Sovitec : billes de verre non revêtues en surface D50 15-30 μm: agent d'évacuation d'air **(J)**

**Rhodopol® 23** vendue par la Sté Solvay Novecare : Gomme Xanthane, epaississant **(K)**

**Imbentin® T/030** vendu par la Sté Dr Kolb : Isotrideceth 3, agent mouillant **(K)**

**Silcolapse® 5020** vendue par la Sté Elkem Silicones : émulsion antimousse **(K)**

**Acide sorbique (K)**

**Proxel® GXL** vendu par la Sté Arch Chemicals : 1, 2-benzisothiazolin-. 3-one, biocide **(K)**

**Aquacolors** Yellow **60118** vendu par la Sté Sioen: Préparation aqueuse de pigment (Colour Index PY 3, 11710) 51% Pigment (C)

**Aquacolors** Red **62153** vendu par la Sté Sioen: Préparation aqueuse de pigment (Colour Index PR 2, 12310) 44% Pigment (C)

CT ML 8181 vendu par la Sté Chem-Trend : Agent de démoulage

### Compositions lubrifiantes d'agent de démoulage

Les différentes compositions lubrifiantes d'agent de démoulage testées sont résumées dans les tableaux 1 et 2. Les quantités sont exprimées en parties en poids.

[Tableau 1]

| Composition | Exemple 1 | Exemple 2 | Exemple 3 | Exemple 4 | Exemple 5 | Exemple Comp.1 | Exemple Comp.2 |
|---|---|---|---|---|---|---|---|
| Partie A | | | | | | | |
| Eau 1 | 35,9 | 35,9 | 35,9 | 35,9 | 35,9 | 35,9 | 35,9 |
| Rhodopol 23 | 0,33 | 0,33 | 0,33 | 0,33 | 0,33 | 0,33 | 0,33 |

(suite)

| Partie B | | | | | | | |
|---|---|---|---|---|---|---|---|
| Eau 2 | 38 | 38 | 38 | 39 | 38 | 38 | 38 |
| Silcolapse 5020 | 0,27 | 0,27 | 0,27 | 0,27 | 0,27 | 0,27 | 0,27 |
| Acide sorbique | 0,08 | 0,08 | 0,08 | 0,08 | 0,08 | 0,08 | 0,08 |
| Glassycoat C3 SP 20-60 TO | 10 | 10 | 10 | 10 | 0 | 10 | 10 |
| Partie C | | | | | | | |
| Emulsion 211 | 12,6 | / | / | 1 | 12,6 | 12,6 | / |
| Emulsion 284 | 0 | 13 | 6 | 6 | / | / | 6 |
| Emulsion 247G | 0 | 0 | 6,5 | 6,5 | / | / | 6,5 |
| Proxel GXL | 0,15 | 0,15 | 0,15 | 0,15 | 0,15 | 0,15 | 0,15 |
| Imbentin T/030 | 0,8 | 0,8 | 0,8 | 0,8 | 0,8 | 0,8 | 0,8 |
| Aquacolors yellow | 2 | 2 | 2 | 1 | 2 | / | / |
| Aquacolors red | / | / | / | 0,5 | / | / | / |
| Caractéristiques | | | | | | | |
| Viscosité Brookfield à 23°C (mPa.s) | 1680 | 1530 | 1570 | 1680 | 1670 | 1860 | 1790 |
| pH | 4,9 | 4,93 | 5,04 | 4,92 | 4,67 | 4,98 | 5,18 |
| Extrait sec (1g, 30 min à 150°C) | 19,69 | 18,94 | 18,64 | 17,72 | 10,67 | 18,81 | 17,48 |

Les émulsions du tableau 1 sont préparées comme suit :

**Préparation de la Partie A :** coulée d'une 1ère fraction d'eau (« eau 1 ») dans un bécher de 1 litre, puis ajout du Rhodopol 23 en pluie sous agitation à 20 000 tours/min à l'aide du disperseur Charvet équipé d'une turbine dé-floculeuse de 35 mm diamètre. Agitation pendant 20 minutes, la viscosité de la solution aqueuse augmente puis se stabilise.

**Préparation de partie B:** Introduction dans un 2ème bécher d'1 litre de la 2ème fraction d'eau (« eau 2 »), de l'antimousse Silcolapse, de l'acide sorbique et le cas échéant des billes de verre (glassycoat™). Agitation à 10000 tr/mn avec le même disperseur Charvet équipé de sa turbine dé-floculeuse de diamètre 35 mm. Puis ajout de la partie A précédente, que l'on disperse à 20000 Tr/mn pendant 20 min.

**Préparation de la partie C:** sous agitation modérée (140 tours/min avec une ancre râclante de 85 mm de diamètre), introduction dans un nouveau bécher de 1 litre de l'émulsion silicone (émulsion 211, ou émulsion 284, ou émulsion 284 puis émulsion 247G) que l'on mélange avec le biocide (Proxel), puis avec du tensioactif additionnel (Imbentin T/030 de Dr.Kolb), et enfin le pigment. Homogénéisation pendant environ une heure avec les mêmes conditions d'agitation.

**Finalisation de la composition lubrifiante d'agent de démoulage** : en versant la dispersion B (contenant la partie A) dans le mélange C, puis agitation modérée pendant 10 minutes.

[Tableau 2]

| Composition | Exemple 6 | Exemple 7 | Exemple 8 |
|---|---|---|---|
| CT ML 8181 | 98 | / | 1 |
| Lyndcoat BR2430 | / | 99 | 98 |
| Aquacolor yellow | 2 | 1 | 2 |
| Caractéristiques | | | |
| Viscosité Brookfield à 23°C (mPa.s) | ND | 1600 | 1600 |
| pH | ND | 5 | 5 |

(suite)

| Caractéristiques | | | |
|---|---|---|---|
| Extrait sec | ND | 27 | 27 |
| ND :non déterminé | | | |

Les compositions du tableau 2 sont préparées en mélangeant sous agitation les compositions CT ML 8181 ou Lyndcoat BR2430 avec le pigment.
Les propriétés des compositions préparées ont ensuite été testées.

<u>**Test de démoulage**</u> :

La durabilité d'une composition lubrifiante correspond au nombre de pneumatiques réalisés sans dégradation de la surface de la vessie dilatable.
Pour ce faire, un film de vessie dilatable, préalablement revêtu par la composition lubrifiante d'agent de démoulage à évaluer, est pressé au contact d'un film d'enveloppe de pneumatique, non vulcanisé, selon une série de cycles de pressions et de températures simulant les étapes de fabrication d'un pneumatique sur l'outil industriel.
Dans le détail, une feuille en caoutchouc, de composition identique à celui de la vessie et de taille 2mmx80mmx80mm est préparée dans une presse chauffante à 200°C pendant 30 minutes. La feuille est structurée en surface pour simuler la surface d'une vessie.
La feuille est revêtue en cabine de peinture par pulvérisation avec un pistolet à air comprimé de la composition d'agent de démoulage. On dépose une couche de 20 µm environ. Après séchage à l'air pendant 1 heure, l'ensemble est cuit à 170°C pendant au moins 10 minutes.
La feuille revêtue est placée dans un moule métallique dans une presse. Les plaques sont chauffées à 170°C. On laisse préchauffer la feuille pendant 5 minutes, puis on dépose un morceau de caoutchouc ILR cru (« Inner Liner Rubber (ILR)» = caoutchouc qui constitue la surface interne d'un pneumatique cru) d'une épaisseur d'environ 9 cm sur la feuille revêtue de la composition d'agent de démoulage. On ferme le moule, puis la presse et on laisse cuire le caoutchouc ILR pendant 7 minutes à 170°C. On ouvre le moule et on retire la fine feuille ILR moulée.
Pour qu'on considère qu'un démoulage est réussi, elle doit se séparer sans forcer ni accrocher. Sinon on note l'échec du démoulage.
Le nombre de démoulages correspond au nombre de feuilles ILR démoulées sans accroche. Les résultats sont présentés dans les tableaux 3 et 4.

<u>**Test de glissement**</u>

L'objectif de ce test est d'apprécier le pouvoir glissant d'une composition d'agent de démoulage placée à l'interface entre la vessie dilatable et la surface interne de l'enveloppe d'un pneumatique.
Ce test est réalisé en faisant glisser sur une surface de caoutchouc, dont la composition est celle de la vessie dilatable, un patin métallique de poids déterminé, sous lequel est fixé un film d'enveloppe de pneumatique (50 x 75 mm).
La surface de caoutchouc est préalablement revêtue par la composition lubrifiante colorée d'agent de démoulage. Après application de la composition, on laisse sécher pendant 1h à température ambiante, puis la surface de caoutchouc est chauffée pendant 10 min à 170°C dans une étuve ventilée.
Le coefficient de friction dynamique est mesuré à l'aide d'un dynamomètre (à la vitesse de 50 mm/min). Cinq passages successifs sont réalisés sur le même échantillon de vessie dilatable en changeant à chaque fois l'échantillon d'enveloppe de pneumatique.
Le coefficient de friction (Kd) correspond à

[Math. 4]

$$Kd\ (sans\ dimension) = \frac{force\ moyenne\ pour\ entrainer\ le\ patin\ (en\ N)}{poids\ du\ patin\ (en\ N)}$$

La valeur de Kd mentionné dans les tableaux 3 et 4 correspond à la moyenne des valeurs obtenues lors des 5 passages.
Plus les valeurs du coefficient de friction sont faibles et meilleures seront les propriétés de glissement de la

composition lubrifiante.

Ce test de glissement est parfaitement représentatif des performances à atteindre sur l'outil industriel, c'est un premier critère de sélection. Les résultats sont présentés dans les tableaux 3 et 4.

## Test de colorimétrie

La teinte des éprouvettes de caoutchouc recouvert par les compositions lubrifiantes colorées d'agent de démoulage est caractérisée avec un spectrocolorimètre de marque GretagMacbeth™ réf. ColorEye ® XTH. Les valeurs de L, La, Lb et delta E sont mesurées.

Il s'agit d'une mesure colorimétrique par réflexion réalisée par rapport à une référence blanche, et comparativement au support en caoutchouc (noir) non enduit qui sert également de référence (et de point zéro pour les valeurs La et Lb).

Tout d'abord un étalonnage préalable avec une référence blanche est réalisé. Puis on mesure un échantillon de référence (support caoutchouc noir, non enduit de silicone) et on mesure un échantillon (caoutchouc enduit par la composition lubrifiante colorée d'agent de démoulage) avant et après traitement thermique à 170°C pendant 20 minutes. Les mesures sont répétées 5 fois et les moyennes sont calculées. La perte de coloration **(X)** étant déterminée par spectrocolorimétrie de la façon suivante :

[Math. 5]

$$X = 100 * \left|\frac{Delta\ E\ final - Delta\ E\ initial}{Delta\ E\ initial}\right|.$$

Les résultats obtenus sont présentés dans les tableaux 3 et 4.

[Tableau 3]

| | Exemple 1 | Exemple 2 | Exemple 3 | Exemple 4 | Exemple 5 | Exemple Comp.1 | Exemple Comp. 2 |
|---|---|---|---|---|---|---|---|
| dépôt sec pour mesures coloration (g/m2) | 21 | 20 | 16 | 17 | 19 | 17 | 16 |
| Mesures de colorimétrie avant traitement thermique | | | | | | | |
| L (avant traitement thermique) | 40,08 | 42,62 | 31,94 | 24,74 | 49,33 | 22,27 | 23,04 |
| La(avant traitement thermique) | -16,7 | -17,6 | -11,16 | 7,01 | -21,6 | -0,2 | -0,02 |
| Lb(avant traitement thermique) | 23,97 | 27,29 | 12,3 | 6,25 | 32,76 | 0,18 | -0,01 |
| delta E initial(avant traitement thermique) | 23,83 | 37,93 | 20,75 | 9,54 | 46,88 | 0,86 | 1,4 |
| Mesures de colorimétrie après traitement thermique | | | | | | | |
| L(après traitement thermique) | 23,08 | 27,27 | 22,36 | 24,84 | 23,64 | 22,55 | 23,94 |
| La(après traitement thermique) | -0,47 | -0,3 | -0,02 | 0,07 | -0,33 | -0,15 | 0 |
| Lb(après traitement thermique) | 0,55 | 0,68 | -0,13 | 0,45 | -0,01 | 0,7 | 0,4 |
| delta E final(après traitement thermique) | 0,74 | 0,83 | 1,41 | 0,7 | 0,43 | 0,97 | 0,91 |
| évolution du delta E après traitement thermique | -23,09 | -37,1 | -19,34 | -8,84 | -46,45 | 0,11 | -0,49 |

(suite)

| Mesures de colorimétrie après traitement thermique | | | | | | | |
|---|---|---|---|---|---|---|---|
| Perte de coloration **(X)** (%) | 96,9 | 97,8 | 93,2 | 92,6 | 99,1 | 12,8 | 35 |
| Test de démoulage | | | | | | | |
| Dépôt sec pour test de démoulage (g/m2) | 13 | 13 | 12 | 13 | 13 | 13 | 13 |
| Démoulage (nombre) | 1 | 1 | 1 | 1 | 1 | 1 | 1 |
| Test de glissement | | | | | | | |
| Dépôt sec pour test de Lubrification (g/m2) | 16 | 17 | 17 | 16 | 16 | 14 | 16 |
| Coefficient de friction dynamique Kd (moyenne sur 20 passages du patin) | 0,1 | 0,09 | 0,09 | 0,09 | 0,34 | 0,09 | 0,1 |

[Tableau 4]

| | Exemple 6 | Exemple 7 | Exemple 8 |
|---|---|---|---|
| dépôt sec pour mesures coloration (g/m2) | 33 | 22 | 22 |
| Mesures de colorimétrie avant traitement thermique | | | |
| L (avant traitement thermique) | 49,36 | 31,94 | 28,44 |
| La(avant traitement thermique) | -21,3 | -11,04 | -16,5 |
| Lb(avant traitement thermique) | 33,75 | 10,75 | 19,69 |
| delta E initial(avant traitement thermique) | 47,46 | 18,94 | 31 |
| Mesures de colorimétrie avant traitement thermique | | | |
| L(après traitement thermique) | 23,27 | 21,67 | 21,82 |
| La(après traitement thermique) | -0,93 | 0,09 | -0,03 |
| Lb(après traitement thermique) | 0,8 | -0,68 | -0,65 |
| delta E final(après traitement thermique) | 1,43 | 0,38 | 0,43 |
| évolution du delta E après traitement thermique | -46,03 | -18,56 | -30,57 |
| Perte de coloration **(X)** (%) | 97,0 | 98,0 | 96,6 |
| Test de démoulage | | | |
| Dépôt sec pour test de démoulage (g/m2) | ND | 20 | 20 |
| Démoulage (nombre) | ND | 11 | 12 |
| Test de glissement | | | |
| Coefficient de friction dynamique Kd (moyenne sur 20 passages du patin) | ND | 0,3 | 0,3 |
| ND=non déterminé | | | |

Ces résultats montrent que les compositions selon l'invention peuvent être visualisées à l'œil nu sur un pneu noir, car le delta E avant traitement thermique est supérieur à 5. De plus, une perte de coloration **(X)** d'au moins 90% est observée après traitement thermique, les compositions selon l'invention ne dégradent donc pas l'aspect du pneu vulcanisé, le pneu vulcanisé reste noir après traitement thermique.

Par ailleurs, il est possible d'utiliser la composition selon l'invention pour du multi-démoulages (exemples 7 et 8).

La présence d'un pigment ne modifie pas le coefficient de friction dynamique Kd (exemples 1 et 3 et exemples

comparatifs 1 et 2). Par ailleurs, la présence de bille de verre permet d'obtenir un meilleur coefficient de friction dynamique (exemples 1 et 5)

## Revendications

1. Procédé de vulcanisation d'un pneu cru au sein d'une presse métallique mettant en œuvre une vessie en caoutchouc dilatable, ledit procédé comprenant les étapes suivantes :

   1. revêtir l'intérieur du pneu cru ou l'extérieur de la vessie en caoutchouc dilatable d'une composition lubrifiante colorée d'agent de démoulage **(I),** sous forme d'émulsion huile dans eau, pour former un revêtement coloré visible à l'œil nu sur le pneu cru ou sur la vessie, ladite composition lubrifiante **(I)** comprenant :

      a. au moins un organopolysiloxane **(A);**
      b. au moins un tensioactif **(B)** ;
      c. au moins un pigment non fluorescent **(C);** e et
      d. de l'eau **(D);**
      les quantités de tensioactif(s) et d'eau étant suffisantes pour l'obtention d'une émulsion huile-dans-eau ;

   2. gonfler la vessie et vulcaniser le pneu au sein de la presse métallique, de préférence à une température comprise entre 80 et 220°C et pour une durée comprise entre 10 minutes et 24h ; et
   3. démouler le pneu, l'intérieur du pneu obtenu à l'étape 3) ne présentant plus de coloration visible à l'œil nu;
   **caractérisé en ce que** l'au moins un pigment non fluorescent (C) est choisi parmi le groupe constitué par, selon la classification Colour Index : monoazo, disazo, aminoketone, indigoïde, phthalocyanine, oxazine, inorganique, et leurs mélanges, de préférence sous forme de dispersion aqueuse.

2. Procédé de vulcanisation d'un pneu cru selon la revendication 1, **caractérisé en ce que** le revêtement coloré visible à l'œil nu sur le pneu cru ou sur la vessie obtenu à l'étape 1) a une perte de coloration **(X)** comprise entre 85 et 100%, entre l'étape 1) et l'étape 3), la perte de coloration **(X)** étant déterminée par spectrocolorimétrie de la façon suivante :

   [Math. 14]

   $$X = 100 * \left| \frac{Delta\ E\ final - Delt\ \ E\ initial}{Delta\ E\ initial} \right| .$$

3. Procédé de vulcanisation d'un pneu cru selon l'une des revendications précédentes, caractérisé en ce en ce que la composition lubrifiante colorée d'agent de démoulage **(I)** comprend entre 0,01% et 3% en poids de pigment non fluorescent **(C)** par rapport au poids total de la composition **(I),** de préférence entre 0,1 et 2,5% en poids.

4. Procédé de vulcanisation d'un pneu cru selon l'une des revendications précédentes, **caractérisé en ce que** l'organopolysiloxane **(A)** est choisi parmi le groupe constitué par :

   - les organopolysiloxanes non réactifs **(E)** qui, par molécule, ont des substituants organiques monovalents, identiques ou différents entre eux, liés aux atomes de silicium, et qui sont choisis parmi le groupe constitué par les radicaux alkyles en $C_1$-$C_{40}$, cycloalkyles en $C_3$-$C_8$, aryles en $C_6$-$C_{10}$ et alkylaryles en $C_7$-$C_{50}$ ;
   - les organopolysiloxanes réactifs **(F)** comportant par molécule au moins deux groupements silanols ≡SiOH ;
   - et leurs mélanges.

5. Procédé de vulcanisation d'un pneu cru selon l'une des revendications précédentes, **caractérisé en ce que** la composition lubrifiante colorée d'agent de démoulage **(I)** comprend en outre (i) au moins un agent réticulant **(G)** ayant, par molécule, au moins trois motifs ≡SiH, et/ou (ii) un catalyseur **(H).**

6. Procédé de vulcanisation d'un pneu cru selon l'une des revendications précédentes, **caractérisé en ce que** composition lubrifiante colorée d'agent de démoulage **(I)** comprend en outre un agent d'évacuation de l'air **(J),** de préférence des billes de verre.

7. Composition lubrifiante colorée d'agent de démoulage **(I),** sous forme d'émulsion huile dans eau, comprenant :

a. au moins un organopolysiloxane **(A)** ; choisi parmi le groupe constitué par :

- les organopolysiloxanes non réactifs **(E)** qui, par molécule, ont des substituants organiques monovalents, identiques ou différents entre eux, liés aux atomes de silicium, et qui sont choisis parmi le groupe constitué par les radicaux alkyles en $C_1$- $C_{40}$, cycloalkyles en $C_3$-$C_8$, aryles en $C_6$-$C_{10}$ et alkylaryles en $C_7$- $C_{50}$ ;
- les organopolysiloxanes réactifs **(F)** comportant par molécule au moins deux groupements silanols ≡SiOH ;
- et leurs mélanges,

b. au moins un tensioactif **(B),**
c. au moins un pigment non fluorescent **(C);** et
d. de l'eau **(D);**
les quantités de tensioactif(s) et d'eau étant suffisantes pour l'obtention d'une émulsion huile-dans-eau ; la composition lubrifiante étant **caractérisée en ce que** l'au moins un pigment non fluorescent **(C)** est choisi parmi le groupe constitué par, selon la classification Colour Index : monoazo, disazo, aminoketone, indigoïde, phthalocyanine, oxazine, inorganique, et leurs mélanges, de préférence sous forme de dispersion aqueuse.

**8.** Composition lubrifiante colorée d'agent de démoulage **(I)** selon la revendication 7, **caractérisée en ce qu'**elle possède une perte de coloration **(X)** comprise entre 85 et 100%, après dépose de la composition sur une vessie dilatable de vulcanisation ou un pneu cru, et traitement thermique à 170°C pendant 20 minutes, la perte de coloration **(X)** étant déterminée par spectrocolorimétrie de la façon suivante :

[Math. 1]

$$X = 100 * \left|\frac{Delta\ E\ final - Delta\ E\ initial}{Delta\ E\ initial}\right| .$$

**9.** Composition lubrifiante colorée d'agent de démoulage **(I)** selon l'une des revendications 7 à 8, **caractérisée en ce qu'**elle comprend entre 0,01% et 3% en poids de pigment non fluorescent **(C)** par rapport au poids total de la composition (I), de préférence entre 0,1 et 2,5% en poids.

**10.** Composition lubrifiante colorée d'agent de démoulage **(I)** selon l'une des revendications 7 à 9, **caractérisée en ce qu'**elle comprend en outre (i) au moins un agent réticulant **(G)** ayant, par molécule, au moins trois motifs =SiH, et/ou (ii) un catalyseur **(H).**

**11.** Composition lubrifiante colorée d'agent de démoulage **(I)** selon l'une des revendications 7 à 10, **caractérisée en ce qu'**elle comprend en outre un agent d'évacuation de l'air **(J),** de préférence des billes de verre.

**12.** Composition lubrifiante colorée d'agent de démoulage **(I)** selon l'une des revendications 7 à 11, **caractérisée en ce qu'**elle comprend

- de 0,1 à 60 parties en poids d'au moins un polyorganosiloxane **(A),** de préférence de 0,1 à 30 parties en poids,
- de 0,1 à 10 parties en poids d'au moins un tensioactif **(B)**
- de 0,01 à 3 parties en poids d'au moins un pigment non fluorescent **(C)** choisi parmi le groupe constitué par, selon la classification Colour Index: monoazo, disazo, aminoketone, indigoïde, phthalocyanine, oxazine, inorganique, et leurs mélanges, de préférence sous forme de dispersion aqueuse,
- de 20 à 90 parties en poids d'eau **(D),** de préférence de 30 à 80 parties en poids,
- de 0 à 20 parties en poids d'au moins un agent réticulant **(G),**
- de 0 à 5 parties en poids d'au moins un catalyseur **(H),**
- de 0 à 20 parties en poids d'un agent d'évacuation de l'air **(J),** de préférence de 0,1 à 15 parties en poids,
- de 0 à 5 parties en poids d'au moins un additif **(K),**

pour 100 parties en poids de la somme des constituants **(A), (B), (C), (D), (G), (H), (J),** et (K).

**13.** Procédé de lubrification **(P1)** d'une vessie en caoutchouc dilatable utile lors d'une vulcanisation d'un pneu cru au sein d'une presse métallique, **caractérisé en ce que** la surface externe de ladite vessie amenée à être en contact avec la face interne dudit pneu cru est revêtue d'une composition lubrifiante colorée d'agent de démoulage **(I)** selon l'une des revendications 7 à 12, ledit procédé permettant ainsi d'obtenir directement une vessie en caoutchouc dilatable lubrifiée sur sa surface externe.

**14.** Procédé de lubrification **(P2)** d'une vessie en caoutchouc dilatable utile lors d'une vulcanisation d'un pneu cru au sein d'une presse métallique, **caractérisé en ce que** dans une première étape à l'extérieur de la presse, la surface interne dudit pneu cru est revêtue d'une composition lubrifiante colorée d'agent de démoulage **(I)** selon l'une des revendications 7 à 12 ;

ladite étape permettant ainsi d'obtenir un pneu cru dont la surface interne est revêtue de la dite-composition **(I);** et lors d'une étape ultérieure au sein de la presse métallique, le pneu cru dont la surface interne est revêtue de la composition **(I)** est mis en contact avec une vessie en caoutchouc dilatable ;
ledit procédé permettant ainsi d'obtenir par transfert une vessie en caoutchouc dilatable lubrifiée sur sa face externe.

**15.** Vessie en caoutchouc dilatable ou pneu cru, revêtu(e) d'une composition lubrifiante colorée d'agent de démoulage **(I)** selon l'une des revendications 7 à 12.

**Patentansprüche**

**1.** Verfahren zur Vulkanisation eines Reifenrohlings in einer Metallpresse unter Verwendung einer dehnbaren Kautschukblase, wobei das Verfahren die folgenden Schritte umfasst:

1. Beschichten der Innenseite des Reifenrohlings oder der Außenseite der dehnbaren Kautschukblase mit einer gefärbten schmierenden Formtrennmittelzusammensetzung (I) in Form einer Öl-in-Wasser-Emulsion unter Bildung einer farbigen Beschichtung, die mit bloßem Auge auf dem Reifenrohling oder auf der Blase sichtbar ist, wobei die schmierende Zusammensetzung (I) Folgendes umfasst:

a. mindestens ein Organopolysiloxan (A);
b. mindestens ein Tensid (B);
c. mindestens ein nicht fluoreszierendes Pigment (C); und
d. Wasser (D);

wobei die Mengen des Tensids und des Wassers zum Erhalt einer Öl-in-Wasser-Emulsion ausreichen;
2. Aufblasen der Blase und Vulkanisieren des Reifens in der Metallpresse, vorzugsweise bei einer Temperatur zwischen 80 und 220°C und über einen Zeitraum zwischen 10 Minuten und 24 h; und
3. Entformen des Reifens, wobei die Innenseite des in Schritt 3) erhaltenen Reifens keine mit bloßem Auge sichtbare Färbung aufweist;

**dadurch gekennzeichnet, dass** das mindestens eine nicht fluoreszierende Pigment (C) aus der Gruppe ausgewählt ist, die nach der Colour-Index-Klassifikation aus Folgendem besteht: Monoazo, Disazo, Aminoketon, Indigoid, Phthalocyanin, Oxazin, anorganisch und Mischungen davon, vorzugsweise in Form einer wässrigen Dispersion.

**2.** Verfahren zur Vulkanisation eines Reifenrohlings nach Anspruch 1, **dadurch gekennzeichnet, dass** die mit bloßem Auge sichtbare farbige Beschichtung auf dem Reifenrohling oder der Blase, die in Schritt 1) erhalten wurde, zwischen Schritt 1) und Schritt 3) einen Farbverlust (X) zwischen 85 und 100 % aufweist, wobei der Farbverlust (X) durch Spektralkolorimetrie wie folgt bestimmt wird:

[Math. 14]

$$X = 100 * \left| \frac{Delta\ E\ Ende - Delta\ E\ Anfang}{Delta\ E\ Anfang} \right| \quad .$$

**3.** Verfahren zur Vulkanisation eines Reifenrohlings nach einem der vorhergehenden Ansprüche, **dadurch gekennzeichnet, dass** die gefärbte schmierende Formtrennmittelzusammensetzung (I) zwischen 0,01 und 3 Gew.-%, vorzugsweise zwischen 0,1 und 2,5 Gew.-%, nicht fluoreszierendes Pigment (C), bezogen auf das Gesamtgewicht der Zusammensetzung (I), umfasst.

**4.** Verfahren zur Vulkanisation eines Reifenrohlings nach einem der vorhergehenden Ansprüche, **dadurch gekennzeichnet, dass** das Organopolysiloxan (A) aus der Gruppe ausgewählt ist, die aus Folgendem besteht:

- unreaktiven Organopolysiloxanen (E), die pro Molekül gleiche oder verschiedene, an die Siliciumatome gebundene einwertige organische Substituenten aufweisen, die aus der Gruppe bestehend aus $C_1$-$C_{40}$-Alkyl-, $C_3$-$C_8$-Cycloalkyl-, $C_6$-$C_{10}$-Aryl und $C_7$-$C_{50}$-Alkylarylresten ausgewählt sind;
- reaktiven Organopolysiloxanen (F) mit mindestens zwei Silanolgruppen ≡SiOH pro Molekül;
- und Mischungen davon.

5. Verfahren zur Vulkanisation eines Reifenrohlings nach einem der vorhergehenden Ansprüche, **dadurch gekennzeichnet, dass** die gefärbte schmierende Formtrennmittelzusammensetzung (I) außerdem (i) mindestens ein Vernetzungsmittel (G) mit mindestens drei ≡SiH-Einheiten pro Molekül und/oder (ii) einen Katalysator (H) umfasst.

6. Verfahren zur Vulkanisation eines Reifenrohlings nach einem der vorhergehenden Ansprüche, **dadurch gekennzeichnet, dass** die gefärbte schmierende Formtrennmittelzusammensetzung (I) zusätzlich ein Luftentfernungsmittel (J), vorzugsweise Glaskugeln, umfasst.

7. Gefärbte schmierende Formtrennmittelzusammensetzung (I) in Form einer Öl-in-Wasser-Emulsion, umfassend:

a. mindestens ein Organopolysiloxan (A); ausgewählt aus der Gruppe bestehend aus:

- unreaktiven Organopolysiloxanen (E), die pro Molekül gleiche oder verschiedene, an die Siliciumatome gebundene einwertige organische Substituenten aufweisen, die aus der Gruppe bestehend aus $C_1$-$C_{40}$-Alkyl-, $C_3$-$C_8$-Cycloalkyl-, $C_6$-$C_{10}$-Aryl und $C_7$-$C_{50}$-Alkylarylresten ausgewählt sind;
- reaktiven Organopolysiloxanen (F) mit mindestens zwei Silanolgruppen ≡SiOH pro Molekül;
- und Mischungen davon,

b. mindestens ein Tensid (B);
c. mindestens ein nicht fluoreszierendes Pigment (C); und
d. Wasser (D);

wobei die Mengen des Tensids und des Wassers zum Erhalt einer Öl-in-Wasser-Emulsion ausreichen; wobei die schmierende Zusammensetzung **dadurch gekennzeichnet ist, dass** das mindestens eine nicht fluoreszierende Pigment (C) aus der Gruppe ausgewählt ist, die nach der Colour-Index-Klassifikation aus Folgendem besteht: Monoazo, Disazo, Aminoketon, Indigoid, Phthalocyanin, Oxazin, anorganisch und Mischungen davon, vorzugsweise in Form einer wässrigen Dispersion.

8. Gefärbte schmierende Formtrennmittelzusammensetzung (I) nach Anspruch 7, **dadurch gekennzeichnet, dass** sie nach dem Aufbringen der Zusammensetzung auf eine dehnbare Vulkanisationsblase oder einen Reifenrohling und Wärmebehandlung bei 170 °C über einen Zeitraum von 20 Minuten einen Farbverlust (X) zwischen 85 und 100 % aufweist, wobei der Farbverlust (X) durch Spektralkolorimetrie wie folgt bestimmt wird:

[Math. 1]

$$X = 100 * \left| \frac{Delta\ E\ Ende - Delta\ E\ Anfang}{Delta\ E\ Anfang} \right| .$$

9. Gefärbte schmierende Formtrennmittelzusammensetzung (I) nach einem der Ansprüche 7 bis 8, **dadurch gekennzeichnet, dass** sie zwischen 0,01 und 3 Gew.-%, vorzugsweise zwischen 0,1 und 2,5 Gew.-%, nicht fluoreszierendes Pigment (C), bezogen auf das Gesamtgewicht der Zusammensetzung (I), umfasst.

10. Gefärbte schmierende Formtrennmittelzusammensetzung (I) nach einem der Ansprüche 7 bis 9, **dadurch gekennzeichnet, dass** sie außerdem (i) mindestens ein Vernetzungsmittel (G) mit mindestens drei ≡SiH-Einheiten pro Molekül und/oder (ii) einen Katalysator (H) umfasst.

11. Gefärbte schmierende Formtrennmittelzusammensetzung (I) nach einem der Ansprüche 7 bis 10, **dadurch gekennzeichnet, dass** sie zusätzlich ein Luftentfernungsmittel (J), vorzugsweise Glaskugeln, umfasst.

12. Gefärbte schmierende Formtrennmittelzusammensetzung (I) nach einem der Ansprüche 7 bis 11, **dadurch gekennzeichnet, dass** sie Folgendes umfasst:

- 0,1 bis 60 Gewichtsteile, vorzugsweise 0,1 bis 30 Gewichtsteile, mindestens eines Polyorganosiloxans (A),
- 0,1 bis 10 Gewichtsteile mindestens eines Tensids (B),
- 0,01 bis 3 Gewichtsteile mindestens eines nicht fluoreszierenden Pigments (C), das aus der Gruppe ausgewählt ist, die nach der Colour-Index-Klassifikation aus Folgendem besteht: Monoazo, Disazo, Aminoketon, Indigoid, Phthalocyanin, Oxazin, anorganisch und Mischungen davon, vorzugsweise in Form einer wässrigen Dispersion,
- 20 bis 90 Gewichtsteile, vorzugsweise 30 bis 80 Gewichtsteile, Wasser (D),
- 0 bis 20 Gewichtsteile mindestens eines Vernetzungsmittels (G),
- 0 bis 5 Gewichtsteile mindestens eines Katalysators (H),
- 0 bis 20 Gewichtsteile, vorzugsweise 0,1 bis 15 Gewichtsteile, eines Lufentfernungsmittels (J),
- 0 bis 5 Gewichtsteile mindestens eines Additivs (K), pro 100 Gewichtsteile der Summe der Bestandteile (A), (B), (C), (D), (G), (H), (J) und (K).

**13.** Verfahren zum Schmieren (P1) einer dehnbaren Kautschukblase, die bei der Vulkanisation eines Reifenrohlings in einer Metallpresse verwendet werden kann, **dadurch gekennzeichnet, dass** die Außenoberfläche der Blase, die mit der Innenseite des Reifenrohlings in Kontakt stehen soll, mit einer gefärbten schmierenden Formtrennmittelzusammensetzung (I) nach einem der Ansprüche 7 bis 12 beschichtet ist, wobei das Verfahren es auf diese Weise ermöglicht, direkt eine dehnbare Kautschukblase, die auf ihrer Außenoberfläche geschmiert ist, zu erhalten.

**14.** Verfahren zum Schmieren (P2) einer dehnbaren Kautschukblase, die bei der Vulkanisation eines Reifenrohlings in einer Metallpresse verwendet werden kann, **dadurch gekennzeichnet, dass** in einem ersten Schritt außerhalb der Presse, die Innenoberfläche des Reifenrohlings mit einer gefärbten schmierenden Formtrennmittelzusammensetzung (I) nach einem der Ansprüche 7 bis 12 beschichtet wird;

wobei der Schritt es auf diese Weise ermöglicht, einen Reifenrohling, dessen Innenoberfläche mit der Zusammensetzung (I) beschichtet ist, zu erhalten; und in einem nachfolgenden Schritt in der Metallpresse der Reifenrohling, dessen Innenoberfläche mit der Zusammensetzung (I) beschichtet ist, mit einer dehnbaren Kautschukblase in Kontakt gebracht wird;
wobei das Verfahren es auf diese Weise ermöglicht, durch Übertragung eine auf ihrer Außenseite geschmierte dehnbare Kautschukblase zu erhalten.

**15.** Dehnbare Kautschukblase oder Reifenrohling, die bzw. der mit einer gefärbten schmierenden Formtrennmittelzusammensetzung (I) nach einem der Ansprüche 7 bis 12 beschichtet ist.

## Claims

**1.** Process for vulcanizing a green tyre in a metal press using an expandable rubber bladder, said process comprising the following steps:

1. coating the inside of the green tyre or the outside of the expandable rubber bladder with a coloured lubricant mould-release composition (I), in the form of an oil-in-water emulsion, to form a coloured coating that is visible to the naked eye on the green tyre or on the bladder, said lubricant composition (I) comprising:

a. at least one organopolysiloxane (A);
b. at least one surfactant (B);
c. at least one non-fluorescent pigment (C);
and
d. water (D);

the amounts of surfactant(s) and water being sufficient to obtain an oil-in-water emulsion;
2. inflating the bladder and vulcanizing the tyre in the metal press, preferably at a temperature of between 80°C and 220°C and for a time of between 10 minutes and 24 h; and
3. demoulding the tyre, the inside of the tyre obtained in step 3) no longer having any colouring that is visible to the naked eye;

**characterized in that** the at least one non-fluorescent pigment (C) is chosen from the group consisting of, according to the Colour Index classification: monoazo, disazo, amino ketone, indigoid, phthalocyanine, oxazine, inorganic, and mixtures thereof, preferably in the form of an aqueous dispersion.

2. Process for vulcanizing a green tyre according to Claim 1, **characterized in that** the coloured coating that is visible to the naked eye on the green tyre or on the bladder obtained in step 1) has a loss of colour (X) of between 85% and 100%, between step 1) and step 3), the loss of colour (X) being determined by spectrocolorimetry in the following manner:

[Math. 14]

$$X = 100 * \left|\frac{final\ Delta\ E - initial\ Delta\ E}{initial\ Delta\ E}\right| .$$

3. Process for vulcanizing a green tyre according to either of the preceding claims, **characterized in that** the coloured lubricant mould-release composition (I) comprises between 0.01% and 3% by weight and preferably between 0.1% and 2.5% by weight of non-fluorescent pigment (C) relative to the total weight of composition (I).

4. Process for vulcanizing a green tyre according to one of the preceding claims, **characterized in that** the organopolysiloxane (A) is chosen from the group consisting of:

   - non-reactive organopolysiloxanes (E) which, per molecule, contain monovalent organic substituents, which may be identical or different, bonded to the silicon atoms, and which are chosen from the group consisting of $C_1$-$C_{40}$ alkyl, $C_3$-$C_8$ cycloalkyl, $C_6$-$C_{10}$ aryl and $C_7$-$C_{50}$ alkylaryl radicals;
   - reactive organopolysiloxanes (F) including at least two ≡SiOH silanol groups per molecule;
   - and mixtures thereof.

5. Process for vulcanizing a green tyre according to one of the preceding claims, **characterized in that** the coloured lubricant mould-release composition (I) also comprises (i) at least one crosslinking agent (G) containing, per molecule, at least three ≡SiH units, and/or (ii) a catalyst (H).

6. Process for vulcanizing a green tyre according to one of the preceding claims, **characterized in that** the coloured lubricant mould-release composition (I) also comprises an air scavenger (J), preferably glass beads.

7. Coloured lubricant mould-release composition (I), in the form of an oil-in-water emulsion, comprising:

   a. at least one organopolysiloxane (A); chosen from the group consisting of:

      - non-reactive organopolysiloxanes (E) which, per molecule, contain monovalent organic substituents, which may be identical or different, bonded to the silicon atoms, and which are chosen from the group consisting of $C_1$-$C_{40}$ alkyl, $C_3$-$C_8$ cycloalkyl, $C_6$-$C_{10}$ aryl and $C_7$-$C_{50}$ alkylaryl radicals;
      - reactive organopolysiloxanes (F) including at least two ≡SiOH silanol groups per molecule;
      - and mixtures thereof,

   b. at least one surfactant (B),
   c. at least one non-fluorescent pigment (C);
   and
   d. water (D);

   the amounts of surfactant(s) and water being sufficient to obtain an oil-in-water emulsion; the lubricant composition being **characterized in that** the at least one non-fluorescent pigment (C) is chosen from the group consisting of, according to the Colour Index classification: monoazo, disazo, amino ketone, indigoid, phthalocyanine, oxazine, inorganic, and mixtures thereof, preferably in the form of an aqueous dispersion.

8. Coloured lubricant mould-release composition (I) according to Claim 7, **characterized in that** it has a loss of colour (X) of between 85% and 100%, after the composition has been deposited on an expandable vulcanization bladder or on a green tyre and heat-treated at 170°C for 20 minutes, the loss of colour (X) being determined by spectrocolorimetry in the following manner:

[Math. 1]

$$X = 100 * \left|\frac{final\ Delta\ E - initial\ Delta\ E}{initial\ Delta\ E}\right| .$$

**9.** Coloured lubricant mould-release composition (I) according to either of Claims 7 and 8, **characterized in that** it comprises between 0.01% and 3% by weight and preferably between 0.1% and 2.5% by weight of non-fluorescent pigment (C) relative to the total weight of composition (I).

**10.** Coloured lubricant mould-release composition (I) according to one of Claims 7 to 9, **characterized in that** it also comprises (i) at least one crosslinking agent (G) containing, per molecule, at least three ≡SiH units, and/or (ii) a catalyst (H).

**11.** Coloured lubricant mould-release composition (I) according to one of Claims 7 to 10, **characterized in that** it also comprises an air scavenger (J), preferably glass beads.

**12.** Coloured lubricant mould-release composition (I) according to one of Claims 7 to 11, **characterized in that** it comprises

- from 0.1 to 60 parts by weight and preferably from 0.1 to 30 parts by weight of at least one polyorganosiloxane (A),
- from 0.1 to 10 parts by weight of at least one surfactant (B),
- from 0.01 to 3 parts by weight of at least one non-fluorescent pigment (C) chosen from the group consisting of, according to the Colour Index classification: monoazo, disazo, amino ketone, indigoid, phthalocyanine, oxazine, inorganic, and mixtures thereof, preferably in the form of an aqueous dispersion,
- from 20 to 90 parts by weight and preferably from 30 to 80 parts by weight of water (D),
- from 0 to 20 parts by weight of at least one crosslinking agent (G),
- from 0 to 5 parts by weight of at least one catalyst (H),
- from 0 to 20 parts by weight and preferably from 0.1 to 15 parts by weight of an air scavenger (J),
- from 0 to 5 parts by weight of at least one additive (K),

per 100 parts by weight of the sum of the constituents (A), (B), (C), (D), (G), (H), (J), and (K).

**13.** Process for lubricating (P1) an expandable rubber bladder that is useful during vulcanization of a green tyre in a metal press, **characterized in that** the outer surface of said bladder to be brought into contact with the inner face of said green tyre is coated with a coloured lubricant mould-release composition (I) according to one of Claims 7 to 12, said process thus making it possible to directly obtain an expandable rubber bladder that is lubricated on its outer surface.

**14.** Process for lubricating (P2) an expandable rubber bladder that is useful during vulcanization of a green tyre in a metal press, **characterized in that**, in a first step outside the press, the inner surface of said green tyre is coated with a coloured lubricant mould-release composition (I) according to one of Claims 7 to 12; said step thus making it possible to obtain a green tyre whose inner surface is coated with said composition (I); and
in a subsequent step in the metal press, the green tyre whose inner surface is coated with composition (I) is placed in contact with an expandable rubber bladder; said process thus making it possible to obtain by transfer an expandable rubber bladder that is lubricated on its outer face.

**15.** Expandable rubber bladder or green tyre, coated with a coloured lubricant mould-release composition (I) according to one of Claims 7 to 12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 022706 A
- EP 1240283 A
- EP 1495076 A
- EP 2038354 A
- EP 1899447 A
- US 4840742 A
- US 5738813 A
- GB 1082179 A
- FR 2149519 A
- WO 9421233 A
- US 3194767 A
- US 3862919 A
- BE 842305 A
- EP 147323 A
- EP 235049 A
- GB 1289900 A
- WO 2010146253 A
- WO 2010146254 A
- WO 2010149869 A
- WO 2010149870 A
- WO 2013004926 A


### Littérature non-brevet citée dans la description


- **STEFAN BREUNIG**. Tire release agents. *Tire technology International*, 2013, 68-72
- Fluorinated Surfactants. Marcel Dekker Inc., 1994
- *CHEMICAL ABSTRACTS*, 65545-80-4
- *CHEMICAL ABSTRACTS*, 70983-60-7
- *journal of the american oil chemists' society (JAOCS)*, January 1992, vol. 69 (1)
- *J. Chim. Phys.*, 1996, vol. 93, 887-898
- **NOLL**. Chemistry and Technology of Silicones. Academic Press, 1968, 397